# EUROPÄISCHE PATENTSCHRIFT

(11) **EP 4 002 172 B1**
(45) Veröffentlichungstag und Bekanntmachung des Hinweises auf die Patenterteilung: **18.01.2023**
(21) Anmeldenummer: 21197043.9
(22) Anmeldetag: 16.09.2021
(51) Int. Cl.: G06F 21/55, G06F 21/56, H04L 9/40

(54) **VERFAHREN ZUR KLASSIFIZIERUNG VON ANOMALEN BETRIEBSZUSTÄNDEN EINES COMPUTERNETZWERKS**
METHOD FOR CLASSIFYING ABNORMAL OPERATING STATES OF A COMPUTER NETWORK
PROCÉDÉ DE CLASSIFICATION DES ÉTATS ANORMAUX DE FONCTIONNEMENT D'UN RÉSEAU INFORMATIQUE

(30) Priorität: 18.11.2020 AT 510102020
(43) Veröffentlichungstag der Anmeldung: 25.05.2022
(73) Patentinhaber: AIT Austrian Institute of Technology GmbH, 1210 Wien (AT)
(72) Erfinder: LANDAUER, Max, 1070 Wien (AT); SKOPIK, Florian, 2000 Stockerau (AT); WURZENBERGER, Markus, 1020 Wien (AT)
(74) Vertreter: Wildhack & Jellinek

(56) Entgegenhaltungen:
- US-A1- 2020 053 111
- US-A1- 2020 336 497
- HAAS STEFFEN ET AL: "Efficient Attack Correlation and Identification of Attack Scenarios based on Network-Motifs", 2019 IEEE 38TH INTERNATIONAL PERFORMANCE COMPUTING AND COMMUNICATIONS CONFERENCE (IPCCC), IEEE, 29. Oktober 2019 (2019-10-29), Seiten 1-11, XP033690301, DOI: 10.1109/IPCCC47392.2019.8958734 [gefunden am 2020-01-13]

## Beschreibung

Die Erfindung betrifft ein Verfahren zur Klassifizierung von anomalen Betriebszuständen eines Computernetzwerks, die auf Variationen unterschiedlicher Angriffstypen zurückzuführen sind, gemäß dem Oberbegriff von Patentanspruch 1.

Angriffserkennungssysteme sind automatisierte Programme, die das Systemverhalten nach vorgegebenen Regeln beobachten und mithilfe spezifisch konfigurierter Detektoren analysieren und in Fall einer Detektion eines Angriffs oder einer Fehlfunktion des Computersystems Alarme bzw. Alarmobjekte erstellt. Angriffserkennungssysteme werden in verschiedensten Netzwerk- und Systemumgebungen eingesetzt, um z.B. Cyber-Angriffe frühzeitig zu erkennen und zu verhindern.

In vielbenützten Systemen ist die Anzahl der Alarme sowohl durch ständige Angriffe - etwa aus dem Internet durch automatisierte Skripte oder Bots - als auch normales Benutzerverhalten, das Fehlalarme auslösen kann, oft immens. Dazu ist es meist nicht möglich, einen Alarm einem bestimmten Angriff zuzuordnen, da:
- Aktionen, die möglicherweise Alarme auslösen, nicht nur einen einzigen Alarm spezifisch für diese Aktion auslösen, sondern meist eine Reihe von Alarmen auslösen.
- Jeder dieser ausgelösten Alarme auch bei anderen Aktionen auftreten könnte, zum Beispiel als Teil der dabei entstehenden Alarme. Dies wird dadurch bekräftigt, dass es im Allgemeinen von Interesse ist, möglichst generische Regeln und Detektoren zur Erkennung von Angriffen zu entwerfen, um so auch noch unbekannte Angriffstechniken oder Varianten von Angriffen mit möglichst großer Wahrscheinlichkeit erkennen zu können.
- Auch bei Auftreten derselben Aktion nicht garantiert ist, dass exakt die gleichen Alarme ausgelöst werden, sondern diese sich in ihren Attributen, Reihenfolgen, oder Auftrittszeitpunkten unterscheiden können.
- Gleiche oder ähnliche Angriffe mit unterschiedlichen Konfigurationen ausgeführt werden können, wodurch sich deren Manifestationen in den beobachteten Systemdaten ändert und somit auch die resultierenden Alarme beeinflusst werden.
- Sich Mischungen aus mehreren Angriffen oder auch Fehlalarmen, die zufällig gleichzeitig auftreten, ergeben können.
- Eine Zuordnung eine vom Menschen durchgeführte semantische Bearbeitung bedarf, diese jedoch im Allgemeinen Fall bei unterschiedlichen Systemumgebungen jeweils spezifisch durchgeführt werden müsste, und es somit keine generell gültige Regelbasis für das Zuordnen von Alarmen zu Angriffen gibt.

Im derzeitigen Stand der Technik existiert jedoch kein Ansatz, der es erlaubt, auftretende Alarme, deren Struktur bzw. beinhaltete Attribute unbekannt sind, spezifischen Angriffstechniken zuzuordnen. Existierende Ansätze basieren ausschließlich auf dem Finden von vordefinierten Werten in verschiedenen Alarmen. Dabei werden vor allem IP-Adressen verwendet, um Verbindungen zwischen Alarmen herzustellen (siehe z.B. Cuppens, F., & Miege, A. (2002, May). Alert correlation in a cooperative intrusion detection framework. In Proceedings 2002 IEEE symposium on security and privacy (pp. 202-215). IEEE), oder die Gruppierung basiert ausschließlich auf wenigen vordefinierten Attributen aus dem IDMEF Format (siehe z.B. Risto Vaarandi. 2009. Real-time classification of IDS alerts with data mining techniques. In MILCOM 2009-2009 IEEE Military Communications Conference. IEEE, 1-7). Dies ist jedoch vor allem bei host-basierten Systemen nicht möglich, da manche Attribute (IP-Adressen, Ports) nicht notwendigerweise in den Protokollzeilen vorhanden sind, sowie auf Systemen, wo aufgrund von Virtualisierung und Containerisierung Netzwerkadressen keine eindeutigen Zuordnungen erlauben. Weiters lassen sich Muster, die auf dem Vorkommen bestimmter systemspezifischer Attribute wie IP-Adressen beruhen, nur schwer auf ein allgemeines dezentralisiertes Netzwerk generalisieren, wo das Erstellen von Verbindungen basierend auf gleichen IP-Adressen nicht möglich ist.

Aufgabe der Erfindung ist es daher, ein Verfahren bereitzustellen, das es ermöglicht, die von Angriffserkennungssystemen erstellten Alarme bzw. Alarmobjekte automatisiert einzelnen Angriffstypen zuzuordnen, sodass die Anzahl an Alarmen bzw. Alarmobjekten, die manuell überprüft werden müssen, effektiv reduziert werden kann.

Die Erfindung löst diese Aufgabe bei einem Verfahren gemäß dem Oberbegriff des Patentanspruchs 1 mit den kennzeichnenden Merkmalen des Patentanspruchs 1. Erfindungsgemäß ist dabei vorgesehen,
- dass die einzelnen Alarmobjekte der Alarmobjektsequenz zu Alarmobjektgruppen zusammengefasst werden,
- dass die einzelnen Alarmobjektgruppen basierend auf der Reihenfolge, der Häufigkeit und/oder den Attributen der den jeweiligen Alarmobjektgruppen zugeordneten Alarmobjekte nach einer vorgegebenen Ähnlichkeitsmetrik hinsichtlich ihrer Ähnlichkeit verglichen und unter Vorgabe eines Alarmobjektgruppen-Ähnlichkeitsschwellenwerts aufgrund deren Ähnlichkeit nach einer vorgegebenen Aggregationsmetrik zu Alarmobjektmustern in Form von Datenobjekten zusammengefasst werden,
   wobei den Alarmobjektmustern jeweils repräsentative Alarmobjekte zugewiesen
   werden, die diejenigen Alarmobjekte, insbesondere deren Attribute und Werte, die den als ähnlich erkannten Alarmobjektgruppen zugeordnet sind, repräsentieren und
   wobei jedem Alarmobjektmuster ein Angriffstyp zugeordnet wird, und
- dass diejenigen anomalen Betriebszustände, die denjenigen Alarmobjekten zugrunde liegen, die den zu einem jeweiligen Alarmobjektmuster zusammengefassten Alarmobjektgruppen zugeordnet sind, als anomale Betriebszustände erkannt werden, die auf denjenigen Angriffstyp zurückzuführen sind, der dem jeweiligen Alarmobjektmuster zugeordnet ist.

Das erfindungsgemäße Verfahren ermöglicht es vorteilhafterweise, von Angriffserkennungssystemen erzeugten Alarmobjekte durch die Erstellung von Alarmobjektmustern einzelnen Angriffen bzw. Angriffstypen zuzuordnen. Auf diese Weise kann eine effektive Reduktion der Anzahl der Alarmobjekte, die von Menschen gesichtet werden müssen, sowie eine semantische Anreicherung mit Angriffsinformationen und automatische Klassifizierung erzielt werden. Dabei werden Alarmobjektmuster durch Aggregation von Einzelalarmobjekten bzw. Alarmobjektgruppen gebildet.

Diese Vorgehensweise bringt unter anderem folgende Vorteile mit sich:
- Reduktion der Alarmobjekte, die vom Menschen gesichtet und interpretiert werden müssen.
- Wiederverwendbarkeit der Alarmobjektmuster, um gleiche oder ähnliche Angriffe auf anderen Systemen erkennen zu können.
- Geringere Wahrscheinlichkeit einer Fehlinterpretation des Menschen durch zusätzliche Information, da ähnliche Alarmobjektmuster bereits in vergangenen Situationen gefunden wurden.
- Verbesserungen der existierenden Erkennungsregeln und Detektoren.

Unter Angriffserkennungssystemen werden im Zusammenhang mit der Erfindung automatisierte Programme zur automatisierten Analyse des Systemverhaltens von Computern bzw. Computernetzwerken verstanden.

Angriffserkennungssysteme werden in verschiedensten Netzwerk- und Systemumgebungen eingesetzt, um z.B. Cyber-Angriffe frühzeitig zu erkennen und zu verhindern. Angriffserkennungssysteme sind automatisierte Programme, die das Systemverhalten beispielsweise nach vorgegebenen Regeln beobachten und mithilfe spezifisch konfigurierter Detektoren analysieren, oder sicherheitsrelevante Ereignisse an dafür zuständige Analysekomponenten weiterleiten.

Dabei kann zwischen signaturbasierten Angriffserkennungssystemen, die nach vorgegebenen Mustern suchen, die bekanntermaßen auf Angriffe auf bzw. Manipulation des Computers bzw. Computernetzwerks hindeuten, zum Beispiel eine bestimmte Zeichenkette, und anomaliebasierten Angriffserkennungssystemen, die mithilfe von selbstlernenden Methoden ein Basisverhalten der Systemumgebung erstellen und Abweichungen von diesem Grundverhalten als möglichen Angriff kennzeichnen und melden, unterschieden werden.

Weiters kann zwischen netzwerkbasierten Angriffserkennungssystemen, die den Datenverkehr zwischen einer Menge an Netzwerkkomponenten, wie zum Beispiel Computern, Routern, Switches oder Firewalls, analysieren, und host-basierten Angriffserkennungssystemen, die Ereignisse auf einer einzelnen Netzwerkkomponente, die zum Beispiel in Protokolldaten und sicherheitsrelevanten Monitoring Daten abgebildet werden, analysieren, unterschieden werden.

Unabhängig vom Typ des Angriffserkennungssystems führen die durch die automatische Analyse als für die weitere Bearbeitung relevant, anomal, oder anderweitig als potentiell gefährlich erkannten Ereignisse oder Aktivitäten zu einer Erzeugung eines Alarmobjekts, das spezifische Informationen über das Angriffserkennungssystem, das analysierte Ereignis, sowie den Kontext (z.B. Uhrzeit, vorhergehende Ereignisse, andere mit dem Ereignis zusammenhängende Ereignisse, die auch möglicherweise aus unterschiedlichen Datenquellen stammen können) des Auftreten dieses Ereignisses umfasst, und an ein weiteres System, insbesondere ein Sicherheitssystem das zur Aufbereitung von Alarmobjekten für die Kontrolle und Bearbeitung durch einen Menschen entwickelt wurde, weitergeleitet wird.

Je nach Systemvoraussetzungen können verschiedenste Angriffserkennungssysteme parallel verwendet werden, die jeweils unterschiedliche Konfigurationen aufweisen. Da es keine Standardisierung von Alarmen gibt, bzw. jeder Versuch einer Standardisierung bzw. Vereinheitlichung (zum Beispiel IDMEF Standard in RFC4765) zu einem Verwerfen von möglicherweise wesentlichen Attributen eines Alarmobjekts führt, hat dies zur Folge, dass bei unterschiedlichen Arten von Angriffen bzw. Angriffsversuchen, unterschiedlich strukturierte Alarmobjekttypen erstellt werden, die jeweils über bestimmte nicht-einheitliche Attribute verfügen.

Die Unterscheidungen der Alarmtypen kann über eine Vielzahl von Aspekten erfolgen, zum Beispiel über einem Alarmobjekt zugeordnete Attribute, zum Beispiel Auftrittszeitpunkt, Information des Detektors oder der verletzten Regel, der zur Verletzung der Regel geführte Wert, Ereignisinformationen, verdächtige und weitere unverdächtige Parameter des Ereignisses, Systemmesswerte, Ordnerstrukturen, betroffene Programme, Vorklassifizierungen durch das Angriffserkennungssystem, etc. Weiters sind die von Angriffen bzw. Angriffsversuchen ausgelösten Sequenzen von Alarmobjekten Variationen unterworfen, wie etwa die Reihenfolge des Auftretens der Alarmobjekte, das Vorhandensein von zusätzlichen Alarmobjekten, dem Ausbleiben von Alarmobjekten in Alarmobjektsequenzen, die relativen Auftrittszeitpunkte der Alarmobjekte, etc.

Unter einem Erkennungsfall im Zusammenhang mit der Erfindung wird verstanden, wenn ein Angriffserkennungssystem, das z.B. über eine Anzahl an Regeln oder selbstlernenden Detektoren verfügt und eine Anzahl an Datenquellen, die z.B. kontinuierlich netzwerkbasierte oder host-basierte Daten zur Verfügung stellen, analysiert, eine Verletzung einer Regel, ein Auftreten eines bestimmten vordefinierten Musters, eine Erkennung eines sicherheitsrelevanten Ereignisses, oder ein anderweitiges ungewöhnliches Abweichen vom als normal angesehenen Verhalten eines Computers bzw. Computersystems feststellt, und daraufhin ein Alarmobjekt oder mehrere Alarmobjekte erzeugt, das oder die an zur Verfügung gehalten oder an andere Systeme weitergeleitet werden können.

Unter einem Alarmobjekt wird im Zusammenhang mit der Erfindung ein von einem Angriffserkennungssystem aufgrund eines Erkennungsfalls generiertes semi-strukturiertes Objekt verstanden, das eines oder mehrere Attribute umfasst, wobei die den jeweiligen Attributen zugehörigen Werte aus Zahlen, Zeichenketten, komplexen Datentypen wie IP Adressen, Listen solcher Werte, oder anderen semi-strukturierten Objekten bestehen können, und die Anzahl und Ausprägung der Attribute je nach Angriffserkennungssystem und Erkennungsfall unterschiedlich sein können.

Unter einer Alarmobjektsequenz im Zusammenhang mit der Erfindung wird eine Abfolge von nach deren zeitlichem Auftreten geordneten Alarmobjekten verstanden, wobei die Alarmobjektsequenzen aufgrund der zeitlichen Nähe und logischen Zusammengehörigkeit der Alarmobjekte unterteilt werden können.

Eine Alarmobjektgruppe im Zusammenhang mit der Erfindung umfasst eine Anzahl von Alarmobjekten, d.h. eine Teilsequenz einer Alarmobjektsequenz, die z.B. aufgrund der zeitlichen Nähe und/oder logischen Zusammengehörigkeit der Alarmobjekte gebildet wurde. Unter einem Alarmobjektmuster wird im Zusammenhang mit der Erfindung eine Alarmobjekt-"Übergruppe" verstanden, die repräsentativ für eine Menge an Alarmobjektgruppen gebildet wird. Das Alarmobjektmuster selbst ist jedoch nicht Teil dieser Menge. Das Alarmobjektmuster stellt die Gesamtheit der repräsentierten Alarmobjektgruppen möglichst gut darstellt bzw. wird so gebildet, dass es eine möglichst hohe Ähnlichkeit zu jeder der einzelnen, der Menge zugehörigen, Alarmobjektgruppen aufweist.

Eine besonders effektive Zuordnung von Alarmobjekten zu Alarmobjektgruppen kann erzielt werden,
- wenn die einzelnen Alarmobjekte der Alarmsequenz nach der zeitlichen Nähe des Zeitpunkts ihrer Erstellung, insbesondere unter Vorgabe eines zeitlichen Abstandsschwellenwerts, zu Alarmobjektgruppen zusammengefasst werden,
   und/oder
- wenn die einzelnen Alarmobjekte der Alarmsequenz nach der Ähnlichkeit der den Alarmobjekten zugeordneten Attribute zu Alarmobjektgruppen zusammengefasst werden.

Um zu erzielen, dass jedes Alarmobjekt jeweils mehreren Alarmobjektgruppen zugeordnet wird, kann dabei insbesondere vorgesehen sein, dass eine Anzahl unterschiedlicher zeitlicher Abstandsschwellenwerte gleichzeitig für die Zusammenfassung zu Alarmobjektgruppen herangezogen werden.

Um sicherzustellen, dass die Alarmobjektmuster basierend auf einer robusten und repräsentativen Auswahl von Alarmobjektgruppen erstellt werden, kann vorgesehen sein, dass eine Datenbank angelegt wird, wobei in der Datenbank die erstellten Alarmobjektgruppen und Alarmobjektmuster, sowie die Zugehörigkeit der einzelnen Alarmobjektgruppen zu den einzelnen Alarmobjektmustern hinterlegt werden.

Eine weitere Verbesserung der Repräsentativität der Alarmobjektmuster basierend kann erzielt werden,
- wenn die einzelnen Alarmobjektgruppen nach deren Erstellung in der Datenbank hinterlegt werden, und
- wenn die Alarmobjektmuster auf Grundlage der in der Datenbank hinterlegten Alarmobjektgruppen erstellt werden, wobei insbesondere vorgesehen ist, dass, im Fall, dass die Datenbank nur eine einzige Alarmobjektgruppe enthält, ein Alarmobjektmuster erstellt wird, dessen repräsentative Alarmobjekte den Alarmobjekten der einzigen Alarmobjektgruppe entsprechen, insbesondere mit den Alarmobjekten der einzigen Alarmobjektgruppe identisch sind.

Um bei einem erfindungsgemäßen Verfahren die Datenbank besonders übersichtlich und kompakt zu gestalten, kann vorgesehen sein, dass die Zugehörigkeit der einzelnen Alarmobjektgruppen zu den einzelnen Alarmobjektmustern in Form von Listen umfassend die einem jeweiligen Alarmobjektmuster zugeordneten Alarmobjektgruppen in der Datenbank hinterlegt wird,
wobei Listen zumindest eines der folgenden Typen angelegt werden:
   - unbeschränkte Listen,
   - linear befüllbare Listen,
   - logarithmisch befüllbare Listen, und
wobei insbesondere vorgesehen ist, dass die Wahrscheinlichkeit einer Ersetzung eines Elements einer logarithmisch befüllbaren Liste mit absteigender Position des Elements in der logarithmisch befüllbaren Liste abnimmt.

Besonders effizient kann die Ähnlichkeit der Alarmobjekte der einzelnen Alarmobjektgruppen untereinander und/oder die Ähnlichkeit neu erstellter Alarmobjektgruppen mit den bereits erstellten Alarmobjektmustern ermittelt werden, wenn die Ähnlichkeit der Alarmobjekte der einzelnen Alarmobjektgruppen und/oder für neu erstellte Alarmobjektgruppen die Ähnlichkeit mit den bereits erstellten Alarmobjektmustern berechnet wird, indem nach übereinstimmenden Attributen und/oder übereinstimmenden, den Attributen zugeordneten, Werten gesucht wird.

Eine Gesamtähnlichkeit der Alarmobjekte innerhalb einer Alarmobjektgruppe kann auf besonders einfache Weise ermittelt werden,
- wenn alle Attribute der hinsichtlich ihrer Ähnlichkeit zu analysierenden Alarmobjekte miteinander verglichen werden und jeweils die Anzahl der Übereinstimmungen und der Unterschiede der den jeweiligen Attributen zugeordneten Werte ermittelt werden und
- wenn eine Gesamtähnlichkeit der Alarmobjekte innerhalb einer Alarmobjektgruppe als Verhältnis der ermittelten Übereinstimmungen zur Summe der Übereinstimmungen und Unterschiede ermittelt wird.

Eine besonders effiziente Vorgehensweise zur Zusammenfassung bzw. Aggregation von Alarmobjektgruppen zu Alarmobjektmustern kann bereitgestellt werden, wenn die als ähnlich erkannten Alarmobjektgruppen zu Alarmobjektmustern zusammengefasst werden, indem
- nach einer vorgegebenen Ähnlichkeitsmetrik nach übereinstimmenden Alarmobjekten in den einzelnen als ähnlich erkannten Alarmobjektgruppen gesucht wird, und
- die einzelnen übereinstimmenden Alarmobjekte zusammengefasst werden, indem jeweils die als übereinstimmend erkannten Attribute der übereinstimmenden Alarmobjekte herangezogen werden und ausgewählte, insbesondere alle, Werte, die den als übereinstimmend erkannten Attributen in den jeweiligen Alarmobjekten zugeordnet sind, gemeinsam mit dem jeweiligen Attribut im entsprechenden repräsentativen Alarmobjekt des Alarmobjektmusters hinterlegt werden.

Eine besonders effiziente Vorgehensweise zur Erstellung von repräsentativen Alarmobjekten von Alarmobjektmustern kann bereitgestellt werden, wenn beim Zusammenfassen der einzelnen übereinstimmenden Alarmobjekte der Alarmobjektgruppen zu Alarmobjektmustern
- Listen umfassend ausgewählte, insbesondere alle, Werte, die einem als übereinstimmend erkannten Attribut in den jeweiligen übereinstimmenden Alarmobjekten zugeordnet sind, gemeinsam mit dem jeweiligen Attribut im jeweils entsprechenden repräsentativen Alarmobjekt des Alarmobjektmusters hinterlegt werden und/oder
- Platzhalter für die Werte, die einem als übereinstimmend erkannten Attribut in den jeweiligen übereinstimmenden Alarmobjekten zugeordnet sind, im jeweils entsprechenden repräsentativen Alarmobjekt des Alarmobjektmusters hinterlegt werden, wenn die Anzahl an unterschiedlichen Werten, die das jeweilige Attribut in den jeweiligen Alarmobjekten annimmt, einen vorgegebenen Maximalwert überschreitet.

Eine besonders effiziente Vorgehensweise zur Suche nach übereinstimmenden Alarmobjekten in den Alarmobjektgruppen kann bereitgestellt werden, wenn die Ähnlichkeitsmetrik für die Suche nach übereinstimmenden Alarmobjekten in den Alarmobjektgruppen auf zumindest einer der folgenden Vorgehensweisen beruht:
a) dass die den Alarmobjektgruppen zugeordneten Alarmobjekte jeweils paarweise hinsichtlich deren Ähnlichkeit miteinander verglichen werden, und dass diejenigen Alarmobjektpaare ermittelt werden, deren Ähnlichkeit am größten ist, wobei insbesondere vorgesehen ist, dass jedes Alarmobjekt nur in einem Alarmobjektpaar enthalten ist,
b) dass zunächst innerhalb der einzelnen Alarmobjektgruppen die Häufigkeiten der einzelnen zugeordneten Alarmobjekte ermittelt werden und Alarmobjekte, deren Ähnlichkeit einen vorgegebenen Alarmobjekt-Ähnlichkeitsschwellenwert übersteigt, als gleich angesehen und zu einem aggregierten Alarmobjekt zusammengefasst werden, dass die aggregierten Alarmobjekte der Alarmobjektgruppen jeweils paarweise miteinander verglichen werden, und dass diejenigen Alarmobjektpaare ermittelt werden, deren Ähnlichkeit am größten ist, indem die Häufigkeiten der einzelnen zugeordneten Alarmobjekte verglichen werden,
c) dass zunächst innerhalb der einzelnen Alarmobjektgruppen Alarmobjekte, deren Ähnlichkeit einen vorgegebenen Alarmobjekt-Ähnlichkeitsschwellenwert übersteigt, als gleich angesehen und zu einem aggregierten Alarmobjekt zusammengefasst werden, dass die aggregierten Alarmobjekte der einzelnen Alarmobjektgruppen Positionen innerhalb des jeweiligen Abschnitts der Alarmsequenz, den die jeweilige Alarmobjektgruppe umfasst, zugeordnet werden und dass mittels Sequenzalignment die Ähnlichkeiten der aggregierten Alarmobjekte der als ähnlich erkannten Alarmobjektgruppen ermittelt werden.

Gemäß einer vorteilhaften Ausführungsform eines erfindungsgemäßen Verfahrens kann auf besonders zuverlässige Weise sichergestellt werden, dass neu hinzugekommene Alarmobjekte bzw. Alarmobjektgruppen bei der Erstellung der Alarmobjektmuster berücksichtigt werden, wenn das Zusammenfassen der Alarmobjektgruppen zu Alarmobjektmustern nach einer erstmaligen Erkennung neuerlich, insbesondere laufend, durchgeführt wird und die repräsentativen Alarmobjekte der einzelnen Alarmobjektmuster auf Grundlage der, in den neu hinzugekommenen, als ähnlich erkannten, Alarmobjektgruppen enthaltenen, Alarmobjekte, insbesondere mit einem erfindungsgemäßen Verfahren, aktualisiert werden,
wobei insbesondere vorgesehen ist, dass die bereits erstellten Alarmobjektmuster mit den neu erstellten Alarmobjektgruppen mit einem erfindungsgemäßen Verfahren zusammengefasst werden.

Eine besonders rasche und rechenleistungsschonende Vorgehensweise zur Klassifizierung des Angriffstyps auf dem neu hinzugekommen Alarmobjekte bzw. Alarmobjektgruppen basieren, kann bereitgestellt werden,
- wenn für neu erstellte Alarmobjektgruppen die Ähnlichkeit mit den bereits erstellten Alarmobjektmustern berechnet wird, wobei eine neue erstellte Alarmobjektgruppe als einem Alarmobjektmuster ähnlich erkannt wird, wenn die berechnete Ähnlichkeit zwischen der jeweiligen Alarmobjektgruppe und dem jeweiligen Alarmobjektmuster einen vorgegebenen Ähnlichkeitsschwellenwert übersteigt, und
- wenn diejenigen Alarmobjektmuster, denen die neu erstellten Alarmobjektgruppen als ähnlich erkannt wurden, auf Grundlage der, in den neu hinzugekommenen Alarmobjektgruppen enthaltenen, Alarmobjekte aktualisiert, insbesondere die jeweiligen Alarmobjektmuster mit den neu erstellten Alarmobjektgruppen mit einem erfindungsgemäßen Verfahren zusammengefasst, werden,
   wobei, im Fall, dass diejenige Alarmobjektgruppe, die als einem Alarmobjektmuster ähnlich erkannt wird, die gleichen Attribute aufweist, wie die Alarmobjektgruppen, auf denen das jeweilige Alarmobjektmuster basiert, die Attribute der repräsentativen Alarmobjekte des Alarmobjektmusters unverändert bleiben, und/oder
- wenn ein neues Alarmobjektmuster erstellt wird, wenn die Ähnlichkeit zwischen den neu erstellten Alarmobjektgruppen und den bereits erstellten Alarmobjektmustern den vorgegebenen Ähnlichkeitsschwellenwert nicht übersteigt.

Ein Programm zur Durchführung eines erfindungsgemäßen Verfahrens kann vorteilhafterweise auch auf einem Datenträger gespeichert sein.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen:
Fig. 1 ein Ausführungsbeispiel für das Zusammenfassen von Alarmobjekten zu Alarmobjektgruppen und das Zusammenfassen von Alarmobjektgruppen zu Alarmobjektmustern,
Fig. 2 ein Ausführungsbeispiel für das Zusammenfassen von Alarmobjekten zu Alarmobjektgruppen basierend auf verschiedenen zeitlichen Abstandsschwellenwerten,
Fig. 3 Ausführungsbeispiele für das Zusammenfassen von Alarmobjektgruppen zu Alarmobjektmustern,
Fig. 4 ein erstes Ausführungsbeispiel eines erfindungsgemäßen Verfahrens mit einer Datenbank und zwei verschiedenen zeitlichen Abstandsschwellenwerten,
Fig. 5 ein zweites Ausführungsbeispiel eines erfindungsgemäßen Verfahrens mit einer Datenbank und zwei verschiedenen zeitlichen Abstandsschwellenwerten,
Fig. 6, Fig. 7, Fig. 8 Beispiele für Alarmobjekte und Alarmobjektgruppen verschiedener Angriffserkennungssysteme,
Fig. 9, Fig. 10 Beispiele für repräsentative Alarmobjekte und Alarmobjektmuster,
Fig. 11, Fig. 13 weitere Beispiele für Alarmobjekte und Alarmobjektgruppen verschiedener Angriffserkennungssysteme,
Fig. 12, Fig. 14 weitere Beispiele für repräsentative Alarmobjekte und Alarmobjektmuster.

### Allgemeine Verfahrensbeschreibung

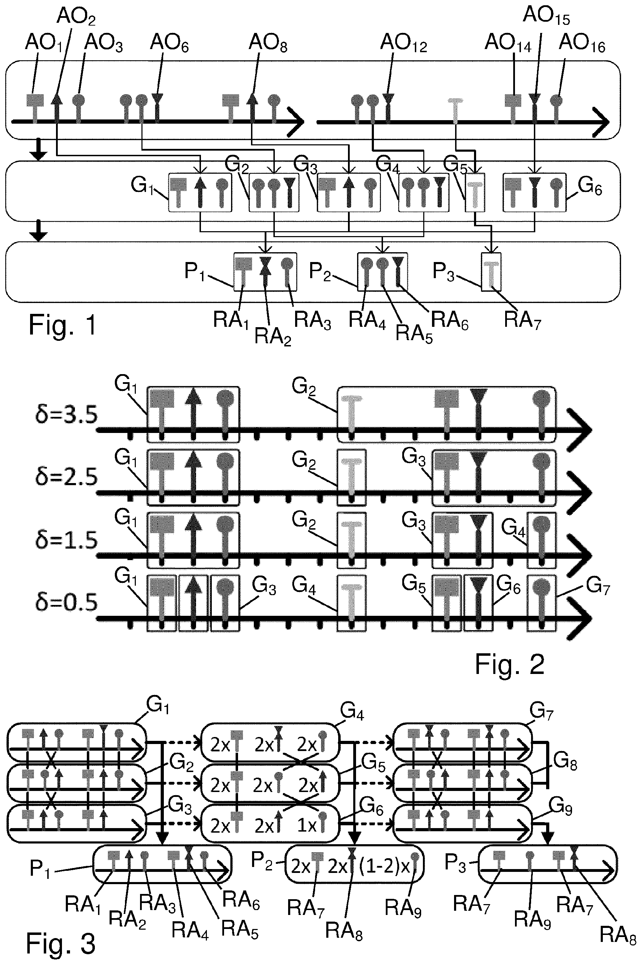

Fig. 1 erörtert die wichtigsten Konzepte der Erfindung: Der obere Teil von Fig. 1 stellt Alarmobjekte AO₁, ..., AO₁₆ dar, die als Abfolgen von Ereignissen auf Zeitlinien auftreten. Die Abbildung enthält zwei Zeitachsen, um darzustellen, dass Alarmobjekte AO₁, ..., AO₁₆ von verschiedenen Angriffserkennungssystemen S_{A}, S_{B},... gesammelt werden können, die entweder in derselben Netzwerkinfrastruktur oder auch in getrennten Systemumgebungen eingesetzt werden. Eine weitere Möglichkeit besteht darin, dass Ereignisse aus historischen Alarmobjektprotokollen abgerufen und für die forensische Analyse von Angriffsmanifestationen verwendet werden.

Fig. 1 zeigt Alarmobjekte AO₁, ..., AO₁₆ mit spezifischen Symbolen (Rechtecke, Kreise, Dreiecke, Balken), die einen bestimmten dem Alarmobjekt AO₁, ..., AO₁₆ zugeordneten Typ repräsentieren, wobei ein Typ aufgrund eines oder mehrerer, insbesondere allen, übereinstimmenden Attributen und den Attributen zugehörige Werten, definiert ist, und insbesondere durch eine in dieser Erfindung beschriebenen Ähnlichkeitsmetrik bestimmt werden kann, wobei zwei Alarmobjekten dann der gleiche Typ zugeordnet wird, wenn sie eine ausreichend große Ähnlichkeit aufweisen, insbesondere eine Ähnlichkeit größer als ein bestimmter Schwellenwert.

Im Allgemeinen stellt jedes Alarmobjekt AO₁, ..., AO₁₆ ein einzigartiges Ereignis dar, das nur zu einem bestimmten Zeitpunkt eintritt. Allerdings können Alarmobjekte AO₁, ..., AO₁₆ desselben Typs, z.B. Alarmobjekte AO₁, ..., AO₁₆, die durch die Verletzung einer bestimmten vordefinierten Regel erzeugt werden, oder Alarmobjekte AO₁, ..., AO₁₆, die von denselben Angriffserkennungssystemen S_{A}, S_{B},... gemeldet werden, mehrfach auftreten. Diese Alarmobjekte AO₁, ..., AO₁₆ werden entsprechend mit dem gleichen Symbol gekennzeichnet. Alarmobjekte AO₁, ..., AO₁₆, die sich nur durch wenige zusätzliche, fehlende, oder veränderte Attribute unterscheiden, beispielsweise durch eines von mehreren abweichenden Attributen, werden beispielhaft zwar mit dem gleichen, aber gedrehten Symbol dargestellt. In oben gezeigter Grafik ist dies bei dem Dreieck, das die Alarmobjekte AO₂, AO₆, AO₈, AO₁₂, AO₁₅ repräsentiert, sichtbar, dessen Spitze einige Male nach oben und einige Male nach unten zeigt.

Wie schon zuvor erwähnt, ist die Zuordnung von Alarmobjekten AO₁, ..., AO₁₆ zu abstrakten Alarmobjektmustern P₁, ..., Pₖ, d.h., Mustern, die ein typisches Auftreten von einem oder mehreren Alarmobjekten AO₁, ..., AO₁₆ repräsentativ beschreiben, nicht trivial.

In dem einfachen Beispiel in Fig. 1 ist zu erkennen, dass die Sequenz der Alarmobjekttypen Rechteck-Dreieck-Kreis manchmal mit dem mit der Spitze nach oben zeigenden Dreiecks und manchmal mit dem mit der Spitze des nach unten zeigenden Dreiecks vorkommt, insgesamt aber dreimal auftritt. Das Muster Kreis-Kreis-Dreieck tritt zweimal in den beiden Zeitlinien auf. Diese Gruppen sind für den Menschen intuitiv sichtbar, da diese Alarmobjekte nahe beieinander liegen und nicht durch andere Alarmobjekttypen unterbrochen werden. Da ein gemeinsames Auftreten von mehreren Alarmobjekten ein wesentlich genauerer Indikator für eine bestimmte auslösende Aktion ist als jeweils alle einzeln auftretenden Alarmobjekte alleine, ist es sinnvoll, Alarmobjekte solchen Alarmobjektgruppen G₁, ..., G₆ zuzuordnen. Der mittlere Teil von Fig. 1 zeigt Alarmobjektgruppen G₁, ..., G₆ auf der Grundlage ihrer jeweiligen zeitlichen Position auf den Zeitachsen.

Eine Gruppierung nach Alarmobjekttypen statt nach zeitlicher Nähe ist bei einem erfindungsgemäßen Verfahren zwar ebenfalls möglich, hätte aber unter Umständen einen Informationsverlust zur Folge, da Alarmobjekte AO₁, ..., AO₁₆ unabhängig von ihrem Kontext, d.h. anderen Alarmobjekten AO₁, ..., AO₁₆, die vermutlich von derselben auslösenden Aktion erzeugt werden, Alarmobjektgruppen G₁, ..., G₆ zugeordnet worden wären. Beispielsweise hätte eine Gruppierung aller Warnmeldungen des Typs Kreis die Tatsache vernachlässigt, dass dieser Typ sowohl in den Mustern Rechteck-Dreieck-Kreis sowie Kreis-Kreis-Dreieck auftritt, und wäre daher für sich allein genommen möglicherweise kein guter Indikator für eine bestimmte Angriffsausführung.

Die Reihenfolge, Häufigkeit und Attribute der Alarmobjekte AO₁, ..., AO₁₆ innerhalb der Alarmobjektgruppen G₁, ..., G₆ ermöglichen die Berechnung von Ähnlichkeiten zwischen ihnen. Alarmobjektgruppen G₁, ..., G₆, die eine hohe Ähnlichkeit ergeben, stehen wahrscheinlich mit derselben Grundursache in Zusammenhang und sollten daher zu einer komprimierten Form zusammengefasst werden, die einen typischen Fall dieser Alarmobjektgruppe G₁, ..., G₆ widerspiegelt, was im Zusammenhang mit der Erfindung als ein Alarmobjektmuster P₁, ..., Pₖ bezeichnet wird.

Der untere Teil der Fig. 1 zeigt die Generierung von Alarmobjektmustern P₁, ..., Pₖ aus ähnlichen Alarmobjektgruppen G₁, ..., G₆. Dabei werden Ordnungen, Häufigkeiten und Attribute der Alarmobjektmuster P₁, ..., Pₖ so erstellt, dass alle zugeordneten Alarmobjektgruppen G₁, ..., G₆ so gut wie möglich repräsentiert werden.

Fig. 1 zeigt, dass dies durch die Zusammenführung der Alarmobjektgruppen G₁, G₃, G₆, die durch die Symbole Rechteck-Dreieck-Kreis repräsentierte Alarmobjekte umfassen, zum Alarmobjektmuster P₁ erreicht wird. Dabei wird ein repräsentatives Alarmobjekt RA₂, d.h. z.B. ein neuer Alarmobjekttyp, dargestellt aus zwei verbundenen Dreiecken, die sowohl nach oben als auch nach unten zeigen, erstellt wird. Dieses repräsentative Alarmobjekt RA₂ ist somit ein Mischtyp aus den bestehenden Dreieck-Alarmobjekttypen AO₂, AO₈, AO₁₅. Das könnte beispielsweise bedeuten, dass zwei verschiedene Attribute der ursprünglichen Alarmobjekte AO₂, AO₈, AO₁₅ zu einer Liste zusammengefasst werden, worauf im Folgenden noch näher eingegangen wird.

Das zweite Alarmobjektmuster P₂ mit dem Alarmobjekttyp-Muster Kreis-Kreis-Dreieck wird aus den zwei identischen Alarmobjektgruppen G₂, G₄ gebildet und die repräsentativen Alarmobjekt RA₄, RA₅, RA₆ entsprechen daher den ursprünglichen Alarmobjekttypen der Alarmobjektgruppen G₂, G₄.

Wenn die Generierung von Alarmobjektmustern P₁, ..., Pₖ auf der Ähnlichkeit der Alarmobjekte AO₁, ..., AOₙ und nicht auf Alarmobjektgruppen G₁, ..., Gₘ basieren würde und angenommen würde, dass das Dreieck mit der Spitze nach unten und das Dreieck mit der Spitze nach oben ähnliche Alarmobjekte AO₁, ..., AOₙ repräsentieren, wären alle ihre Vorkommnisse durch den vorher genannten Mischtyp als repräsentatives Alarmobjekt RA ersetzt worden, und hätten somit die Genauigkeit des zweiten Alarmobjektmusters P₁, ..., Pₖ verringert. Dies legt nahe, dass die Bildung von Alarmobjektgruppen G₁, ..., Gₘ logisch zusammenhängender Alarmobjekte AO₁, ..., AOₙ ein wesentlicher Vorteil bei der Generierung von Alarmobjektmustern P₁, ..., Pₖ ist.

Abschließend enthält des dritte Alarmobjektmuster P₃ ein einziges repräsentatives Alarmobjekt RA₇ (Balken), das nur einmal auftritt und das einzige Alarmobjekt in seiner Gruppe G₅ ist.

### Detaillierte Verfahrensbeschreibung

Als Datengrundlage für ein erfindungsgemäßes Verfahren wird eine Alarmobjektsequenz aus einem oder mehreren Angriffserkennungssystemen S_{A}, S_{B} genutzt, in der die einzelnen Alarmobjekte AO₁, ..., AOₙ in der Abfolge ihres Auftretens, insbesondere versehen mit einem Zeitstempel, enthalten sind, wobei den einzelnen Alarmobjekten AO₁, ..., AOₙ jeweils eine Anzahl von Attributen und den Attributen zugeordnete Werte, insbesondere eine Anzahl von Zahlen, Zeichenketten und/oder Objekten, zugeordnet sind, die den jeweils aufgetretenen anomalen Betriebszustand, der vom jeweiligen Angriffserkennungssystem S_{A}, S_{B} als einem Erkennungsfall entsprechend erkannt wurde, charakterisieren.

Der erste Schritt eines erfindungsgemäßen Verfahrens ist die Bildung von Alarmobjektgruppen G₁, ..., Gₘ aus diesen eingehenden Alarmobjekten AO₁, ..., AOₙ. Dabei werden z.B. diejenigen Alarmobjekte AO₁, ..., AOₙ zu einer Alarmobjektgruppe G₁, ..., Gₘ zusammengefasst, deren Abstände zum jeweils nächsten Alarmobjekt AO in der Alarmobjektsequenz einen vorgegebenen zeitlichen Abstandsschwellenwert δ unterschreiten.

Fig. 2 verdeutlicht dieses Vorgehen, wobei jede Markierung an jedem Zeitstrahl eine Distanz von einer Zeiteinheit bedeutet. Wie in Fig. 2 zu sehen ist, führen kleinere zeitliche Abstandsschwellenwerte δ zur Bildung einer größeren Anzahl von Alarmobjektgruppen G. So werden bei einem zeitlichen Abstandsschwellenwert δ=0,5 Zeiteinheiten jeweils nur noch einzelne Alarmobjekte A zu einer Alarmobjektgruppe G zusammengefasst, während bei einem zeitlichen Abstandsschwellenwert δ=3,5 Zeiteinheiten jeweils am drei bzw. vier einzelne Alarmobjekte AO zu zwei Alarmobjektgruppen G zusammengefasst werden.

Eine manuelle Angabe eines bestimmten zeitlichen Abstandsschwellenwerts als maximal zulässiger zeitlichen Abstandsschwellenwert δ zwischen den Alarmobjekten AO₁, ..., AOₙ ist nicht trivial, da ein hohes Maß an Wissen über die Interaktionen der Alarmobjekte AO₁, ..., AOₙ und die erwarteten Strukturen der Alarmobjektsequenzen einfließen. Dazu kommt, dass unterschiedliche Alarmobjektmuster P₁, ..., Pₖ spezifische Einstellungen für den zeitlichen Abstandsschwellenwert δ erfordern können, die jedoch untereinander inkompatibel sind. Um dieses Problem zu lösen, kann die Alarmobjektgruppenbildung für mehrere zeitliche Abstandsschwellenwerte δ parallel durchgeführt werden. Dadurch erhöht sich die Wahrscheinlichkeit, dass für verschiedene Arten von Mustern von Alarmobjekten AO₁, ..., AOₙ gültige und brauchbare Alarmobjektmustern P₁, ..., Pₖ gefunden werden.

Das **Vergleichen und Zusammenfassen** bzw. Aggregieren **von Alarmobjektgruppen** G₁, ..., Gₙ zu Alarmobjektmustern P₁, ..., Pₙ wird in Fig. 3 schematisch dargestellt. In Fig. 3 sind in drei Spalten jeweils drei Alarmobjektgruppen G₁, G₂, G₃; G₄, G₅, G₆; G₇, G₈, G₉ untereinander dargestellt, für die anhand einer vorgegebenen Ähnlichkeitsmetrik die Ähnlichkeit ermittelt werden soll, und die jeweils zu einer einzigen Alarmobjektgruppe G aggregiert werden sollen.

Die strichlierten und durchgezogenen Pfeile in Fig. 3 haben eine unterschiedliche Bedeutung: Die durchgezogenen Pfeile in Fig. 3 stellen dar, wie Alarmobjektgruppen G₁, G₂, G₃; G₄, G₅, G₆; G₇, G₈, G₉ miteinander aggregiert werden - an der Spitze des Pfeils steht also die jeweils aus den einzelnen Alarmobjektgruppen G₁, G₂, G₃; G₄, G₅, G₆; G₇, G₈, G₉ aggregierte Alarmobjektgruppe. Die strichlierten Pfeile in Fig. 3 stellen dar, dass eine einzelne Alarmobjektgruppe G₁, G₂, G₃; G₄, G₅, G₆; G₇, G₈, G₉ zu einer anderen Darstellungsform umgewandelt wird, und zwar immer in der Reihenfolge: Ursprüngliche Alarmobjektgruppe (links) -> Häufigkeitsbasierte Alarmobjektgruppe (Mitte) -> Sequenzalignmentbasierte Alarmobjektgruppe (rechts).

Insgesamt werden drei Möglichkeiten betrachtet:
Die linke Seite der Fig. 3 zeigt die erste Möglichkeit, wobei die Alarmobjekte AO der drei Alarmobjektgruppen G₁, G₂, G₃ miteinander verglichen werden. Insbesondere wird eine Ähnlichkeitsmetrik für Alarmobjekte AO festgelegt, um so das Auffinden von Paaren von Alarmobjekten AO über mehrere Alarmobjektgruppen G₁, G₂, G₃ hinweg zu ermöglichen, die eine hohe Ähnlichkeit erzielen. Dadurch ist es vorteilhafterweise nicht notwendig, vorauszusetzen, dass alle Alarmobjekte AO in der gleichen Reihenfolge in den einzelnen Alarmobjektgruppen G₁, G₂, G₃ auftreten.

Mit Hilfe der Ähnlichkeitsmetrik für Alarmobjekte AO werden dabei die Attribute aller Alarmobjekte AO verglichen, wobei idente oder ähnliche Attribute zu einer höheren Wahrscheinlichkeit zwischen Alarmobjekten AO beitragen, als unähnliche oder ungleiche Attribute. Die Gesamtähnlichkeit einer Alarmobjektgruppe G₁, G₂, G₃ wird dann als ein gewichtetes Mittel, insbesondere der Durchschnitt, aller Ähnlichkeiten der gefundenen Alarmobjekt-Paare berechnet.

Um Alarmobjektgruppen G₁, ..., Gₘ zu aggregieren, kann wiederum ein Auffinden von Paaren von zusammengehörigen Alarmobjekten AO₁, ..., AOₙ verwendet werden, um diese dann einzeln zu Aggregieren und deren Gesamtheit der Alarmobjektgruppe zuzuordnen. Diese zweite Möglichkeit ist in der Mitte der Fig. 3 für die Alarmobjektgruppen G₄, G₅, G₆ schematisch dargestellt.

Besonders vorteilhaft können in diesem Zusammenhang beim Aggregieren der Alarmobjekte AO₁, ..., AOₙ diejenigen Attribute, die in allen Alarmobjekten AO₁, ..., AOₙ gleich sind, als einfache Attribute eingefügt werden. Weiters können besonders vorteilhaft, diejenigen Attribute, die wenige Ausprägungen, insbesondere mit einer Anzahl unterhalb eines vorgegebenen Schwellenwerts, über die Alarmobjekte AO₁, ..., AOₙ hinweg annehmen, als Listen gespeichert werden.

Außerdem können vorteilhafterweise diejenigen Attribute, die viele Ausprägungen über die Alarmobjekte AO₁, ..., AOₙ hinweg annehmen, insbesondere mit einer Anzahl über einen bestimmten Schwellenwert, als Platzhalter, die beliebige Werte annehmen können, gespeichert werden. Die Ähnlichkeitsmetrik der Alarmobjekte AO₁, ..., AOₙ könnte dann die Attribute, die einen der in den Listen gespeicherten Werte annehmen, sowie diejenigen Attribute, die zu den Platzhaltern zugeordnet werden, positiv auf die Gesamtähnlichkeit auswirken lassen. Solch eine Zuordnung von Platzhaltern und Listen zu Attributen von Alarmobjekten wird im Folgenden als Aggregationsmethode für Alarmobjekte bezeichnet.

Der mittlere Teil der Fig. 3 zeigt eine besonders effiziente Methode zum Finden der Ähnlichkeit von Alarmobjektgruppen G₄, G₅, G₆ und Erstellen einer aggregierten Alarmobjektgruppe bzw. des Alarmobjektmusters P₂, unabhängig von der Position der Alarmobjekte AO₁, ..., AOₙ in den jeweiligen Alarmobjektsequenzen. Dabei werden in der Mitte von Fig. 3 innerhalb jeder Alarmobjektgruppe G₄, G₅, G₆ zuerst die Häufigkeiten aller Alarmobjekte AO₁, ..., AOₙ bestimmt, wobei ähnliche Alarmobjekte A, also Alarmobjekte A, deren Ähnlichkeit einen vorgegebenen Alarm-Ähnlichkeitsschwellenwert für die minimale Ähnlichkeit für Alarmobjekte AO überschreiten, als gleich angesehen werden, und jede Menge an Alarmobjekten AO wird im des Alarmobjektmusters P₂ bzw. in der aggregierten Alarmobjektgruppe durch ein repräsentatives Alarmobjekt RA₇, RA₈, RA₉ dargestellt wird, das sich als Aggregation aller ähnlichen Alarmobjekte AO ergibt.

Dann wird wie zuvor eine Zuordnung zwischen den repräsentativen Alarmobjekten RA₇, RA₈, RA₉ über die Alarmobjektgruppen G₁, ..., Gₘ hinweg durchgeführt, wobei sich in diesem Fall die Anzahl der notwendigen Vergleiche von der Gesamtheit der Alarmobjekte AO₁, ..., AOₙ auf die repräsentativen Alarmobjekte RA₇, RA₈, RA₉ reduziert hat.

Die Ähnlichkeit der Alarmobjektgruppen G₁, ..., Gₘ kann nun einerseits bestimmt werden, indem die Häufigkeiten der zugeordneten repräsentativen Alarmobjekte RA₇, RA₈, RA₉ verglichen wird. Beispielsweise kann das Verhältnis der Häufigkeiten bestimmt werden, sodass übereinstimmende Häufigkeiten einen positiven Einfluss auf die Ähnlichkeit haben, geringe Abweichungen einen negativen Einfluss auf die Ähnlichkeit haben, und starke Abweichungen einen stark negativen Einfluss auf die Ähnlichkeit haben.

Ein Zusammenfassen bzw. eine Aggregation der Alarmobjektgruppen G₁, ..., Gₘ zu einem Alarmobjektmuster P₂ ist anschließend möglich, indem Grenzen für die jeweiligen Häufigkeiten der vorkommenden repräsentativen Alarmobjekte RA₇, RA₈, RA₉ festgelegt werden, sodass alle Alarmobjektgruppen G₁, ..., Gₘ diesen Häufigkeitsintervallen entsprechen, das heißt, dass für jedes der repräsentativen Alarmobjekte RA₇, RA₈, RA₉ die minimale und maximale Häufigkeit der den repräsentativen Alarmobjekten zugehörigen Alarmobjekte AO₁, ..., AOₙ bestimmt und als minimale und maximale Grenzen für die Häufigkeiten der repräsentativen Alarmobjekte RA₇, RA₈, RA₉ im Alarmobjektmuster festgelegt werden. Die zugehörigen Alarmobjekte AO₁, ..., AOₙ zu diesen Häufigkeitsverteilungen werden wiederum durch eine Aggregation der repräsentativen Alarmobjekte RA₇, RA₈, RA₉ der Alarmobjektgruppen G₁, ..., Gₘ erzeugt.

Die rechte Seite der Fig. 3 zeigt eine besonders effiziente Methode zum Finden der Ähnlichkeit der Alarmobjektgruppen G₇, G₈, G₉ und Erstellen einer aggregierten Alarmobjektgruppe bzw. des Alarmobjektmusters P₃ basierend auf den Positionen der Alarmobjekte AO₁, ..., Aₙ in den jeweiligen Alarmobjektsequenzen. Dabei werden die repräsentativen Alarmobjekte RA₇, RA₈, RA₉, die im Zuge der vorherigen Methode erstellt wurden, den Positionen der ursprünglichen Alarmobjekte AO₁, ..., AOₙ in den jeweiligen Alarmobjektsequenzen der Alarmobjektgruppen G₇, G₈, G₉ zugeordnet. Dann ist es mithilfe von bekannten Methoden aus dem Sequenzalignment (siehe z.B. Gonzalo Navarro. 2001. A guided tour to approximate string matching. ACM computing surveys (CSUR) 33, 1 (2001), 31-88), die die notwendigen Änderungsoperationen zählen, um die jeweiligen Alarmobjektsequenzen in Übereinstimmung zu bringen, möglich, die Ähnlichkeit der Alarmobjektgruppen G₇, G₈, G₉ zu bestimmen. Ebenso können diese Methoden, insbesondere für das Feststellen einer längsten gemeinsamen und möglicherweise unterbrochenen Alarmobjektkette, die in allen Alarmobjektgruppen G₇, G₈, G₉ vorhanden ist, verwendet werden, um das Alarmobjektmuster P₃ bzw. die aggregierte Alarmobjektgruppe zu erstellen.

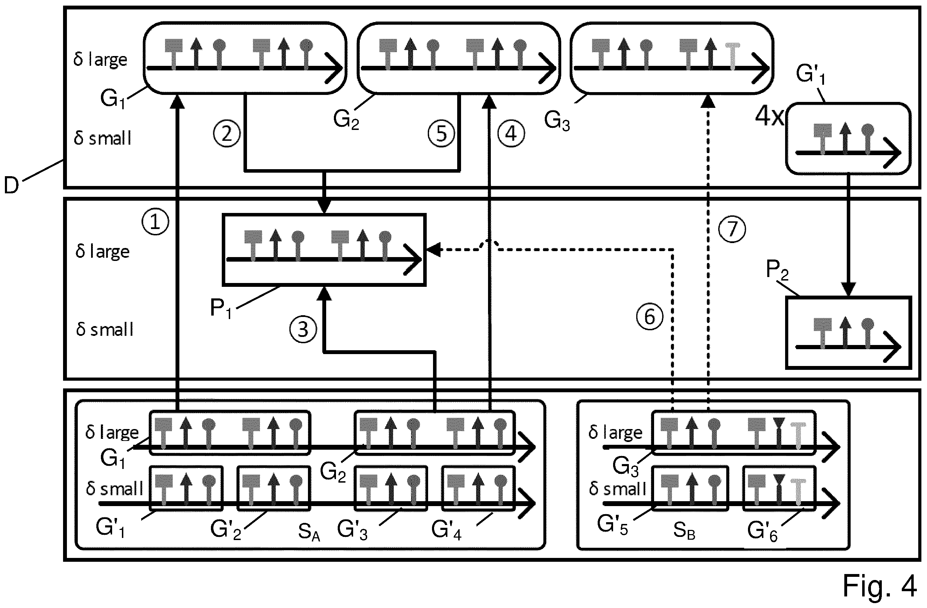

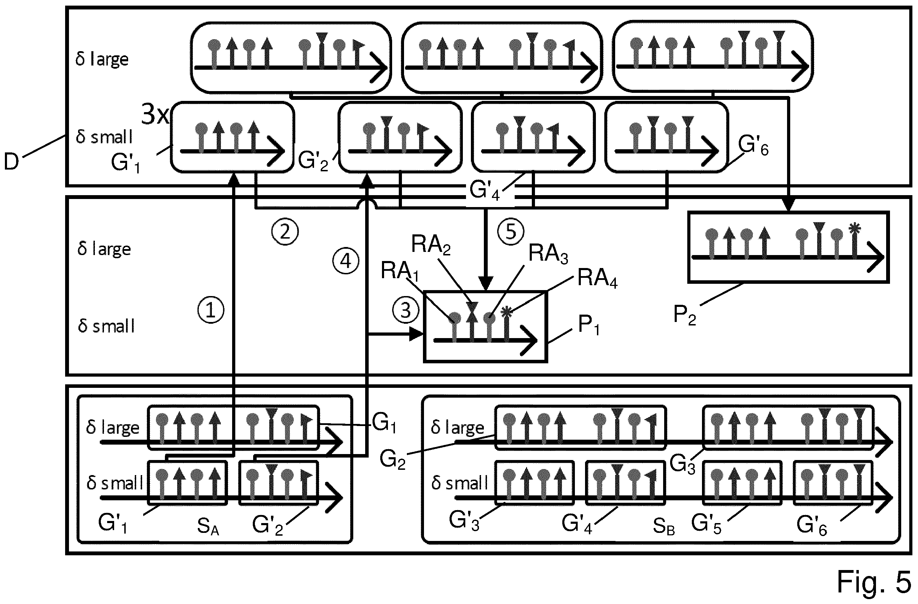

Anhand der Fig. 4 wird beispielhaft ein **erstes Ausführungsbeispiel** eines erfindungsgemäßen Verfahrens mit zwei zeitlichen Abstandsschwellenwerten δ_{large} und δₛₘₐₗₗ und einer Datenbank D erläutert. In der Datenbank D werden die erstellten Alarmobjektgruppen G₁, ..., G₄ hinterlegt und Alarmobjektmuster P₁, P₂ werden auf Grundlage der in der Datenbank D hinterlegten Alarmobjektgruppen G₁, ..., G₄ erstellt. Diese Alarmobjektmuster P₁, P₂, sowie die Zugehörigkeit der einzelnen Alarmobjektgruppen G₁, ..., G₄ zu den einzelnen Alarmobjektmustern P₁, P₂ werden ebenfalls in der Datenbank D hinterlegt. Aus Gründen der Übersichtlichkeit sind in Fig. 5 die einzelnen Alarmobjekte AO₁, ..., AOₙ der Alarmgruppen G₁, ..., G₃; G'₁, ..., G'₆ nicht mit Bezugszeichen gekennzeichnet.

Das erste Ausführungsbeispiel in Fig. 4 dargestellt und befasst sich mit dem Finden von Alarmobjektmustern P₁, P₂ und der Wiedererkennung dieser Alarmobjektmuster P₁, P₂ auf verschiedenen Angriffserkennungssystemen S_{A}, S_{B}. Der untere Teil der Fig. 4 zeigt das Auftreten von Alarmobjekten AO₁, ..., AOₙ in Form von Alarmobjektsequenzen, die von den Angriffserkennungssystemen S_{A}, S_{B} erzeugt werden. In den Alarmobjektsequenzen sind die einzelnen Alarmobjekte AO₁, ..., AOₙ in der Abfolge ihres Auftretens, z.B. versehen mit einem Zeitstempel enthalten, die von den beiden Angriffserkennungssystemen S_{A}, S_{B} erstellt werden. Der mittlere Teil der Fig. 4 beinhaltet die erstellten Alarmobjektmuster P₁, P₂.

Der obere Teil der Fig. 4 zeigt eine Datenbank D, in der im Ausführungsbeispiel alle erstellten Alarmobjektgruppen G₁, ..., G₄, sowie deren Zuordnungen zu den erstellten Alarmobjektmustern P₁, P₂ gespeichert werden. Das bedeutet, dass jede Alarmobjektgruppe G₁, ..., G₄ von Alarmobjekten AO₁, ..., AOₙ, die erkannt wurde, in dieser Datenbank D dauerhaft gespeichert wird, und dass zu jeder dieser Alarmobjektgruppen G₁, ..., G₄ eine Referenz zum zugehörigen Alarmobjektmuster P₁, P₂ gespeichert wird, z.B. in Form einer Liste für jedes Alarmobjektmuster P₁, P₂ mit Referenzen zu den zugehörigen Alarmobjektgruppen G₁, ..., G₄. Es ist somit möglich, alle einem Alarmobjektmuster P₁, P₂ zugehörigen Alarmobjektgruppen G₁, ..., G₄ zu erhalten, indem über alle Referenzen auf Alarmobjektgruppen G₁, ..., G₄, die in der für diesen Alarmobjektmuster P₁, P₂ gespeicherten Liste vorhanden sind, iteriert wird.

Die Datenbank D stellt somit vorteilhafterweise sicher, dass Alarmobjektmuster P₁, P₂ quasi als repräsentative aggregierte Alarmobjektgruppe für alle in der Datenbank D gespeicherten Alarmobjektgruppen G₁, ..., G₄ erzeugt werden. Zwar funktioniert ein erfindungsgemäßes Verfahren auch ohne eine derartige Datenbank D ausreichend zuverlässig. Eine derartige Datenbank D verhindert allerdings vorteilhafterweise, dass die bestehenden Alarmobjektmuster P₁, P₂ immer weiter verändert werden, sobald neue Alarmobjektgruppen G zugeordnet werden, was zu einer Übergeneralisierung führen könnte. Da übergeneralisierte Alarmobjektmuster P₁, P₂ umso mehr Zuordnungen von neu erstellten Alarmobjektgruppen G erhalten, könnte sich dieser Effekt über die Zeit sogar verstärken, was durch eine Datenbank D zuverlässig verhindert wird.

Das Erstellen einer Datenbank könnte unter Umständen mit einer erhöhten Komplexität des Verfahrensablaufs, einer Erhöhung des Speicherbedarfs, da zu jedem Alarmobjektmuster P₁, ..., Pₖ eine Menge an Alarmobjektgruppen G₁, ..., Gₘ gespeichert werden, und einer Erhöhung der Laufzeit, da bei jeder Neuerstellung eines Alarmobjektmusters P₁, ..., Pₖ mehrere Alarmobjektgruppen G₁, ..., Gₘ aggregiert werden, einhergehen. Dies könnte vor allem im Betrieb in Echtzeit zu Problemen führen, wenn sich die Anzahl der Alarmobjektgruppen G₁, ..., Gₘ stetig erhöht und somit bei längerem Betrieb aufgrund einer zu hohen Rechenzeit, die durch die Aggregation der den Alarmobjektmustern P₁, ..., Pₖ zugehörigen Alarmobjektgruppen G₁, ..., Gₘ verursacht werden könnte, neue Alarmobjekte AO₁, ..., AOₙ nicht mehr ohne große Verzögerung prozessiert werden würden.

Daher können bei einem erfindungsgemäßen Verfahren optional zur Vermeidung dieser Probleme drei verschiedene Strategien zur Speicherung von Listen der zu Alarmobjektmustern P₁, ..., Pₖ zugehörigen Alarmobjektgruppen G₁, ..., Gₘ angewendet werden, die je nach Anwendungsfall ausgewählt werden können:
So kann die Zugehörigkeit der einzelnen Alarmobjektgruppen G₁, ..., Gₘ zu den einzelnen Alarmobjektmustern P₁, ..., Pₖ in Form von Listen umfassend die einem jeweiligen Alarmobjektmuster P₁, ..., Pₖ zugeordneten Alarmobjektgruppen G₁, ..., Gₘ in der Datenbank D hinterlegt werden. Dabei kann es sich um einen oder mehrere der folgenden Listentypen handeln:
- Unbeschränkte Listen: Diese Strategie impliziert, dass die Zahl der Listeneinträge unbegrenzt anwachsen kann. Eine solche Strategie ist nützlich für forensische Analysen, bei denen keine Prozessierung in Echtzeit notwendig ist und die Gesamtzahl der Alarmobjektgruppen G₁, ..., Gₘ begrenzt und klein genug ist, um alle Alarmobjektgruppen G₁, ..., Gₘ zu speichern.
- Linear befüllbare Listen: Bei dieser Strategie ist die Größe der Listen auf einen Fixwert begrenzt. Sobald die Größe einer Liste diesen Wert erreicht, führt das Hinzufügen einer neuen Alarmobjektgruppe G dazu, dass die älteste Alarmobjektgruppe in der Liste G₁, ..., Gₘ entfernt wird, womit sich die Listengröße nicht weiter ändert.
- Logarithmisch befüllbare Listen: Zuerst wird die Liste bis zu ihrer maximalen Größe wie bei einer linear befüllbaren Liste gefüllt. Dann ersetzt jede neu hinzugefügte Alarmobjektgruppe Gₘ die Alarmobjektgruppe Gₘ an der letzten Position mit einer Wahrscheinlichkeit von 50%, verschiebt die Alarmobjektgruppe Gₘ an der letzten Position mit einer Wahrscheinlichkeit von 25% um eine Position in Richtung der Alarmobjektgruppe G₁ an ersten Position und überschreibt somit die Alarmobjektgruppe Gₘ₋₁ an der vorletzten Position, verschiebt die beiden letzten Alarmobjektgruppen mit einer Wahrscheinlichkeit von 12,5% gemeinsam um eine Position in Richtung der ersten Position und überschreibt somit die Alarmobjektgruppe Gₘ₋₂ an der vorvorletzten Position, usw. Dadurch wird sichergestellt, dass Alarmobjektgruppen G₁, ..., Gₘ, die in den ersten Positionen der Liste gespeichert sind, länger in den Listen gespeichert bleiben und somit die Gesamtheit der in der Liste gespeicherten Alarmobjektgruppen G₁, ..., Gₘ eine vielfältigere und repräsentativere Menge darstellen. Diese Strategie ist daher besonders nützlich, wenn Alarmobjektgruppen G₁, ..., Gₘ über lange Zeitintervalle auftreten, z.B. wenn sie aus verschiedenen Systemumgebungen gesammelt werden.

In Fig. 4 werden jedem der horizontal voneinander getrennten Blöcke werden zwei Abschnitte angezeigt, einer für einen großen zeitlichen Abstandsschwellenwerten δ_{large} (oben) und einer für einen kleinen zeitlichen Abstandsschwellenwerten δₛₘₐₗₗ (unten). Wie in der Fig. 4 zu sehen ist, wird die Anzahl der gebildeten Alarmobjektgruppen durch den zeitlichen Abstandsschwellenwerten δ beeinflusst, d.h. für das Angriffserkennungssystem S_{A} werden zwei Alarmobjektgruppen G₁, G₂ für einen großen zeitlichen Abstandsschwellenwerten δ_{large} und vier Alarmobjektgruppen G'₁, ..., G'₄ für einen kleinen zeitlichen Abstandsschwellenwerten δₛₘₐₗₗ gebildet.

Der Einfachheit halber wird im Folgenden nur auf die Alarmobjektgruppen P₁, P₂, die für den großen zeitlichen Abstandsschwellenwerten δ_{large} gebildet werden, beginnend mit der ersten Alarmobjektgruppe P₁, die Alarmobjekte AO₁, ..., AO₆ umfasst, die durch ein sich zweimal wiederholendes Muster der Symbole Rechteck-Dreieck-Kreis repräsentiert werden.

Da am Beginn des Ablaufs eines erfindungsgemäßen Verfahrens zunächst keine Alarmobjektmuster P existieren, wird die Alarmobjektgruppe G₁ in die Datenbank D aufgenommen und gleichzeitig als neues Alarmobjektmuster hinzugefügt, indem sie kopiert wird, wie in Schritt (1) angegeben in Fig. 4. Da zu diesem Zeitpunkt nur diese Alarmobjektgruppe G₁ in der Datenbank D existiert, ist der Alarmobjektmuster ident mit der ursprünglichen Alarmobjektgruppe G₁. Erst danach findet die Generierung eines Alarmobjektmusters P₁ aus mehreren Alarmobjektgruppen G₁, G₂ der Datenbank D statt, wie in Schritt (2) angegeben.

Die zweite Alarmobjektgruppe G₂, die vom Angriffserkennungssystem S_{A} unter Verwendung des großen zeitlichen Abstandsschwellenwerten δ_{large} identifiziert wurde, beinhaltet die gleiche Abfolge an Alarmobjekten wie die erste Alarmobjektgruppe G₁. Schritt (3) zeigt, dass die Ähnlichkeit zwischen der zweiten Alarmobjektgruppe G₂ und dem Alarmobjektmuster P₁ berechnet wird.

Da es nur ein Alarmobjektmuster P₁ gibt und angenommen wird, dass die erreichte Ähnlichkeit mit der zweiten Alarmobjektgruppe größer als ein vordefinierter Alarmobjektgruppen-Ähnlichkeitsschwellenwert t ist, wird die zweite Alarmobjektgruppe G₂ der Datenbank D hinzugefügt, die die Alarmobjektgruppen G₁, G₂ speichert, die dem Alarmobjektmuster P₁ zugeordnet sind, wie in Schritt (4) angegeben.

Das Hinzufügen löst eine Neuerstellung des Alarmobjektmusters P₁ aus, wie in Schritt (5) angegeben. Die Neuerstellung des Alarmobjektmusters P₁ ist vorteilhaft, damit das Alarmobjektmuster P₁ stets einer typischen Repräsentation aller ihm zugeordneten Alarmobjektgruppen G₁, G₂, die in der Datenbank D gespeichert sind, entspricht, und somit auch den in der neu zugeordneten Alarmobjektgruppe G₂ enthaltenen Strukturen von Alarmobjekten AO₁, ..., AO₆ oder Abfolgen von Alarmobjekten ausreichend entspricht. Unter der Annahme, dass alle Alarmobjekte AO₁, ..., AO₆ in der ersten und zweiten Alarmobjektgruppe G₁, G₂ die gleichen Attribute haben, bleibt das neuerstellte Alarmobjektmuster P₁ unverändert.

Nun tritt eine dritte Alarmobjektgruppe G₃ im Angriffserkennungssystem S_{B} zu einem Zeitpunkt auf, der nach der Erstellung des Alarmobjektmusters P₁ von Angriffserkennungssystem S_{A} generiert wurde. Wie zuvor wird für die dritte Alarmobjektgruppe G₃ die Ähnlichkeit zu allen bisher vorhandenen Alarmobjektmustern, in Fig.4 ist dies nur das Alarmobjektmuster P₁, berechnet, wie in Schritt (6) gezeigt.

In diesem Fall stimmen nur die ersten vier Alarmobjekte AO₁, ..., AO₄ der sechs Alarmobjekte der Alarmobjektgruppe G₃ überein, was bedeutet, dass die Ähnlichkeit geringer ist als die zuvor berechnete Ähnlichkeit der zweiten Alarmobjektgruppe G₂ zum Alarmobjektmuster P₁. Ein Grund dafür könnten systemspezifische Attributwerte in Warnmeldungen oder Variationen der Angriffsausführung sein, die die Alarmobjekte auf Angriffserkennungssystem S_{B} entsprechend abändern. Unter der Annahme, dass die Ähnlichkeit ausreichend hoch ist, d.h. über dem vorgegebenen Alarmobjektgruppen-Ähnlichkeitsschwellenwert t liegt, kann dies als Erkennung einer Ausführung desselben Angriffs auf Angriffserkennungssystem S_{B} interpretiert werden.

Andernfalls wird ein neues Alarmobjektmuster P basierend der dritten Alarmobjektgruppe G₃ generiert. In jedem Fall wird die Alarmobjektgruppe G₃ der Datenbank D hinzugefügt, wie in Schritt (7) angegeben.

Eine Neugenerierung des Alarmobjektmusters bzw. Generierung eines weiteren Alarmobjektmusters ist in der Grafik nicht dargestellt, da sich das zweite Ausführungsbeispiel ausführlicher mit diesem Fall befasst.

Die Vorgehensweise für diejenigen Alarmobjektgruppen G'₁, ..., G'₄, die für den kleinen zeitlichen Abstandsschwellenwert δₛₘₐₗₗ identifiziert wurden, ist analog, aber aus Übersichtsgründen nicht in Fig. 4 eingezeichnet. Wie in der rechten Seite der Fig. 4 dargestellt, werden die vier auf Angriffserkennungssystem S_{A} identifizierten Alarmobjektgruppen G'₁, ..., G'₄ iterativ, d.h. aufeinanderfolgend, zur Datenbank D hinzugefügt und alle zu einem einzigen Alarmobjektmuster P₂ zusammengeführt. Auf Angriffserkennungssystem S_{B} werden für den kleinen zeitlichen Abstandsschwellenwert δₛₘₐₗₗ zwei Alarmobjektgruppen G'₅, G'₆ identifiziert, von denen die Alarmobjektgruppen G'₅ die gleiche Alarmobjektsequenz wie das Alarmobjektmuster P₂ umfasst und daher ähnlich genug ist, um eine erfolgreiche Erkennung des dem Alarmobjektmuster P₂ zugeordneten Angriffstyp zu ergeben, während die andere Alarmobjektgruppen G'₆ nur eines von drei Alarmobjekten gemeinsam mit dem Alarmobjektmuster P₂ hat und daher nicht ähnlich genug ist, um als auf demjenigen Angriffstyp beruhend erkannt zu werden, der dem Alarmobjektmuster P₂ zugeordnet ist.

Das zweite Ausführungsbeispiel ist in Fig. 5 schematisch dargestellt und konzentriert sich auf die Zusammenlegung von Alarmobjektgruppen, die auf verschiedenen Angriffserkennungssystem S_{A}, S_{B} identifiziert wurden. Die in Fig. 5 markierten Schritte konzentrieren sich der Einfachheit halber nur auf die Ergebnisse des kleinen zeitlichen Abstandsschwellenwerts δₛₘₐₗₗ. Aus Gründen der Übersichtlichkeit sind in Fig. 5 die einzelnen Alarmobjekte AO₁, ..., AOₙ der Alarmgruppen G'₁, ..., G'₆ nicht mit Bezugszeichen gekennzeichnet.

Ähnlich wie im ersten Ausführungsbeispiel deuten die Schritte (1) und (2) auf die Generierung eines Alarmobjektmusters P₁ aus der ersten Alarmobjektgruppe G'₁ auf Angriffserkennungssystem S_{A} hin, wobei die Alarmobjektgruppe G'₁ zuerst der Datenbank D hinzugefügt wird und erst dann das Alarmobjektmuster P₁ erzeugt wird.

In diesem zweiten Ausführungsbeispiel unterscheidet sich jedoch die zweite Alarmobjektgruppe G'₂ von Angriffserkennungssystem S_{A} im zweiten und vierten Alarmobjekt von Alarmobjektgruppe G'₁, was dadurch angedeutet ist, dass die Spitzen der Dreiecke in unterschiedliche Richtungen zeigen. Es wird angenommen, dass die Alarmobjektgruppe G'₂ dennoch eine ausreichend hohe Ähnlichkeit bei der Prüfung in Schritt (3) ergibt und daher in Schritt (4) zur Datenbank D hinzugefügt und dem Alarmobjektmuster P₁ zugeordnet wird. Dies wiederum führt zur Neuerzeugung des Alarmobjektmusters P₁, wobei die erste als auch die zweite Alarmobjektgruppe G'₁, G'₂ aggregiert bzw. zusammengefasst werden. Das daraus resultierende Alarmobjektmuster P₁ ist eine Verschmelzung dieser Alarmobjektgruppen G'₁, G'₂, in der Art, dass der zweite und vierte Alarmobjekt ein Mischtyp aus den jeweiligen zweiten und vierten Alarmobjekten der ersten und zweiten Alarmobjektgruppe G'₁, G'₂ von Angriffserkennungssystem S_{A} darstellt.

Anders als im ersten Ausführungsbeispiel, wo es darum geht, dasselbe Alarmobjektmuster auf einem anderen System zu erkennen, werden jetzt auch die Alarmobjektgruppen von Angriffserkennungssystem S_{B} miteinbezogenen, um einen systemübergreifendes Alarmobjektmuster zu generieren.

Auf Angriffserkennungssystem S_{B} wurden für den kleinen zeitlichen Abstandsschwellenwert δₛₘₐₗₗ weitere vier Alarmobjektgruppen G'₃, ..., G'₆ identifiziert, und unter der Annahme, dass alle ähnlich genug zu dem Alarmobjektmuster P₁ sind, werden alle zur Datenbank D hinzugefügt und dem Alarmobjektmuster P₁ zugeordnet. Bei der Generierung des Alarmobjektmusters P₁ werden also die sechs Alarmobjektgruppen G'₁, ..., G'₆ zusammengefasst bzw. aggregiert.

In jeder Alarmobjektgruppe G'₁, ..., G'₆ sind das erste und das dritte Alarmobjekt vom gleichen Typ Kreis, welcher im resultierenden Alarmobjektmuster als repräsentatives Alarmobjekt RA₁ bzw. RA₃ beibehalten wird. In drei der Alarmobjektgruppen ist das zweite Alarmobjekt vom Typ Dreieck mit der Spitze nach oben, in den anderen drei ist es der Typ Dreieck mit der Spitze nach unten. Dementsprechend wird das zweite repräsentative Alarmobjekt RA₂ im Alarmobjektmuster P₁ in einem kombinierten Alarmobjekttyp, der aus zwei Dreiecken besteht, die jeweils mit der Spitze nach oben und unten zeigen, zusammengeführt, was im zweiten Ausführungsbeispiel bedeutet, dass ein Attribut des Alarmobjekts durch eine Liste mit zwei verschiedenen Werten dargestellt wird. Dadurch wird sichergestellt, dass das jeweilige Attribut jeder Alarmobjektgruppe G'₁, ..., G'₆ mit dem Attribut im Alarmobjektmuster P₁ übereinstimmt.

Das vierte Alarmobjekt hingegen ist diverser, da ein Alarmobjekttyp mit einem Dreieck, das in jede der vier möglichen Richtungen zeigt, in mindestens einer Alarmobjektgruppe G'₁, ..., G'₆ an dieser Position vorkommt. Dementsprechend ersetzt die Aggregationsmethode für Alarmobjekte das entsprechende Attribut des jeweiligen Alarmobjekts im Alarmobjektmuster P₁ durch ein repräsentatives Alarmobjekt RA₄ in Form eines Platzhalters, der durch den Alarmobjekttyp Stern gekennzeichnet ist. Beispielsweise könnte in dem betroffenen Attribut ein Zähler stehen, der sich bei jeder Ausführung ändert, und deshalb als variabel und nicht spezifisch für das Alarmobjekt oder Angriff gelten sollte. Da der Wert durch einen Platzhalter ersetzt wird, stimmen nicht nur die Alarmobjekte aller Alarmobjektgruppen G'₁, ..., G'₆ überein, sondern auch jeder Wert, der für dieses Attribut auftreten könnte.

Das zweite Alarmobjektmuster P₂, das basierend auf den Alarmobjektgruppen G₁, ..., G₃ der Angriffserkennungssystem S_{A}, S_{B} generiert wurde, die unter Verwendung des großen zeitlichen Abstandsschwellenwerts δ_{large} gebildet wurden, zeigt, dass die Abfolge der zusammengeführten Alarmobjekte vom ersten Alarmobjektmuster P₁ abweicht, z.B. treten die Alarmobjekttypen Dreieck mit der Spitze nach oben sowie Dreieck mit der Spitze nach unten anstelle des kombinierten Alarmobjekttyps, der zwei Dreiecke beinhaltet, auf.

Dies legt nahe, dass es vorteilhaft ist, verschiedene zeitlichen Abstandsschwellenwerte δ gleichzeitig zu berücksichtigen, da jedes der erstellten Alarmobjektmuster P die bestmögliche Wiedererkennung ermöglichen könnte, je nachdem, welche Alarmobjekte AO bei einer erneuten Ausführung des Angriffs erstellt werden würden.

Im Folgenden wird dieses zweite Ausführungsbeispiel der Erfindung im Detail diskutiert. Im Gegensatz zur Fig. 5 werden aus Gründen der Vollständigkeit drei anstatt zwei zeitlichen Abstandsschwellenwerte δ_{large}, δₛₘₐₗₗ verwendet. Der dritte zeitlichen Abstandsschwellenwert δ₃ ist kleiner als beide in Fig. 5 dargestellten zeitlichen Abstandsschwellenwerte δ_{large}, δₛₘₐₗₗ und soll den Grenzfall verdeutlichen, bei dem aufgrund eines sehr kleinen zeitlichen Abstandsschwellenwertes δ jedes Alarmobjekt AO₁, ..., AOₙ für sich eine eigene Alarmobjektgruppe G₁, ..., Gₙ bildet. Die beiden anderen zeitlichen Abstandsschwellenwerte δ_{large}, δₛₘₐₗₗ im Beispiel entsprechen genau den zeitlichen Abstandsschwellenwerten δ_{large}, δₛₘₐₗₗ der Fig. 5.

### Detaillierter Verfahrensablauf anhand des zweiten Ausführungsbeispiels

Im folgenden Ausführungsbeispiel werden Alarmobjekte AO₁, ..., AOₙ als zeitliche Ereignisse mit verschiedenen semi-strukturierten Attributen betrachtet. Beispielhaft werden zwei Alarmobjekttypen verwendet, die sich stark in den jeweils vorhandenen Attributen unterscheiden.

Alarmobjekttyp 1 (dargestellt durch das Symbol Kreis) besitzt die Attribute A, B, und C, Alarmobjekttyp 2 (dargestellt durch das Symbol Dreieck) besitzt die Attribute X, Y, und Z. Jedes Attribut kann einen bestimmten Wert annehmen, zum Beispiel, X=x. Es ist möglich, dass komplexe Werte, wie zum Beispiel Listen oder weitere semi-strukturierte Objekte mit weiteren Attributen, angenommen werden. Im folgenden Beispiel werden jedoch nur einfache Werte verwendet. Insbesondere werden für die Attribute A, B, C, X, und Y, jeweils die Werte a, b, c, x, und y verwendet. Das Attribut Z kann eines von vier verschiedenen Werten einnehmen, diese sind z1, z2, z3, und z4 (siehe Tabelle 1).

**Tabelle 1: Alarmobjekte AO₁, ..., AO₈ des Angriffserkennungssystems S_{A}:**

| **Alarmobjekt-ID** | **Zeitschritt** | **Attribut 1** | **Attribut 2** | **Attribut 3** |
|---|---|---|---|---|
| 1 | 0 | A=a | B=b | C=c |
| 2 | 3 | X=x | Y=y | Z=z1 |
| 3 | 6 | A=a | B=b | C=c |
| 4 | 9 | X=x | Y=y | Z=z1 |
| 5 | 31 | A=a | B=b | C=c |
| 6 | 34 | X=x | Y=y | Z=z3 |
| 7 | 37 | A=a | B=b | C=c |
| 8 | 40 | X=x | Y=y | Z=z2 |

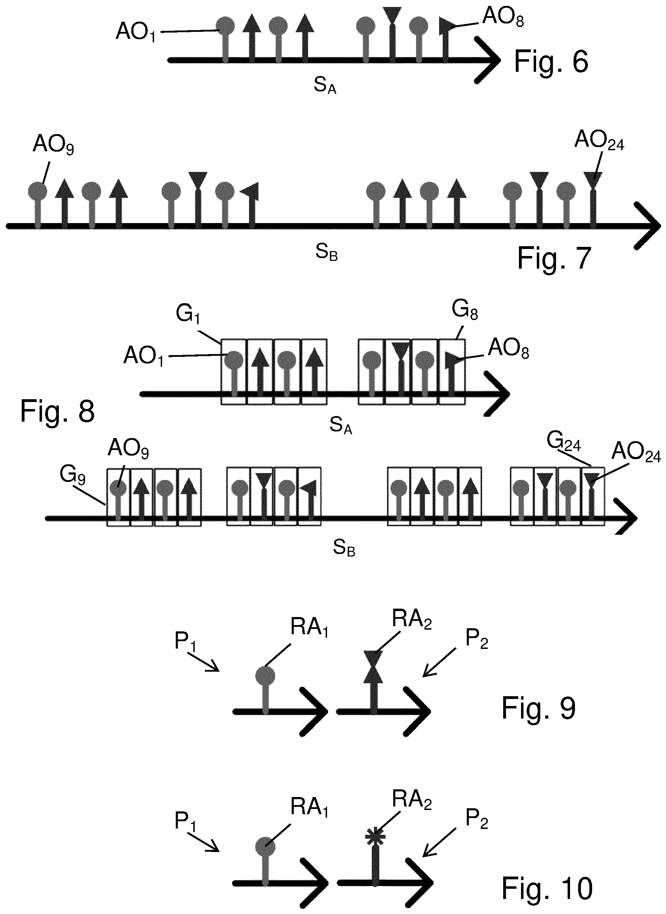

In Fig. 6 sind die Alarmobjekte AO₁, ..., AO₈ einer Alarmobjektsequenz des Angriffserkennungssystems S_{A} visuell dargestellt (zeitliche Abstände sind nicht maßstabsgetreu).

Wobei die folgende Zuordnung von Symbolen und Alarmobjekt-Typen gewählt wurde:
- Alarmobjekttyp 1 (Attribute A=a, B=b, und C=c): Kreis
- Alarmobjekttyp 2 (Attribute X=x, Y=y, und Z=z1): Dreieck mit Spitze nach oben
- Alarmobjekttyp 2 (Attribute X=x, Y=y, und Z=z2): Dreieck mit Spitze nach rechts
- Alarmobjekttyp 2 (Attribute X=x, Y=y, und Z=z3): Dreieck mit Spitze nach unten
- Alarmobjekttyp 2 (Attribute X=x, Y=y, und Z=z4): Dreieck mit Spitze nach links

**Tabelle 2: Alarmobjekte AO₉, ..., AO₂₄ des Angriffserkennungssystems S_{B}:**

| **Alarmobjekt-ID** | **Zeitschritt** | **Attribut 1** | **Attribut 2** | **Attribut 3** |
|---|---|---|---|---|
| 9 | 110 | A=a | B=b | C=c |
| 10 | 113 | X=x | Y=y | Z=z1 |
| 11 | 116 | A=a | B=b | C=c |
| 12 | 119 | X=x | Y=y | Z=z1 |
| 13 | 142 | A=a | B=b | C=c |
| 14 | 145 | X=x | Y=y | Z=z3 |
| 15 | 148 | A=a | B=b | C=c |
| 16 | 151 | X=x | Y=y | Z=z4 |
| 17 | 214 | A=a | B=b | C=c |
| 18 | 217 | X=x | Y=y | Z=z1 |
| 19 | 220 | A=a | B=b | C=c |
| 20 | 223 | X=x | Y=y | Z=z1 |
| 21 | 246 | A=a | B=b | C=c |
| 22 | 249 | X=x | Y=y | Z=z3 |
| 23 | 252 | A=a | B=b | C=c |
| 24 | 255 | X=x | Y=y | Z=z3 |

In Fig. 7 sind die Alarmobjekte AO₉, ..., AO₂₄ (siehe Tabelle 2) einer Alarmobjektsequenz des Angriffserkennungssystems S_{B} visuell dargestellt (zeitliche Abstände sind nicht maßstabsgetreu).

Zu beachten ist, dass die auftretenden Alarmobjekte AO₉, ..., AO₂₄ wiederholende Abfolgen bzw. Muster bilden. Insbesondere wechseln sich der Alarmobjekttyp 1 und der Alarmobjekttyp 2 jeweils ab. Weiters häufen sich die Alarmobjekte an bestimmten Zeitpunkten: Jeweils vier Alarmobjekte treten im Abstand von 3 Sekunden auf und formen Alarmobjektgruppen (zum Beispiel Alarmobjekte AO₉-AO₁₂ auf Angriffserkennungssystem S_{B}). Jeweils zwei dieser Alarmobjektgruppen treten im Abstand von 22 Sekunden auf (zum Beispiel Alarmobjekte AO₉-AO₁₂ und Alarmobjekte AO₁₃-AO₁₆). In Angriffserkennungssystem S_{A} tritt nur ein solches Paar auf (Alarmobjekte AO₁-AO₄ und Alarmobjekte AO₅-AO₈), in Angriffserkennungssystem S_{B} treten zwei dieser Paare im Abstand von 63 Sekunden auf.

Im Folgenden werden die Zeitspannen 1 Sekunde, 10 Sekunden (entspricht dem kleinen zeitlichen Abstandsschwellenwert δₛₘₐₗₗ in Abb. Fig. 5), und 50 Sekunden (entspricht dem großen zeitlichen Abstandsschwellenwert δ_{large} in Fig. 5) als beispielhafte Wahl für den zeitlichen Abstandsschwellenwert δ_{I} betrachtet. Weiters wird ein Alarmobjektgruppen-Ähnlichkeitsschwellenwert t=0,5 als Mindestähnlichkeit für Alarmobjektgruppen G gewählt und eine Maximalgröße von 2 Einträgen für aggregierte Listen festgelegt.

Wird eine Zeitspanne von 1 Sekunde gewählt, so bildet jedes Alarmobjekt AO für sich eine Alarmobjektgruppe G, da zwischen keinen zwei Alarmobjekten AO eine kleinere zeitliche Distanz kleiner als 1 Sekunde besteht. Fig. 8 zeigt diese Alarmobjektgruppen G und die zugehörigen Alarmobjekte AO für die beiden Angriffserkennungssysteme S_{A}, S_{B}.

Zunächst wird für die erste Alarmobjektgruppe G₁, die das erste Alarmobjekt AO₁ des Alarmobjekttyps 1 von Angriffserkennungssystem S_{A} (Alarmobjekt-ID 1, Alarmobjekttyp Kreis) beinhaltet, ein erstes Alarmobjektmuster P₁ erstellt, da zu diesem Zeitpunkt noch kein Alarmobjektmuster vorhanden ist. Dies geschieht, indem die Alarmobjektgruppe, wie zuvor beschrieben, einer Datenbank D zugeordnet wird, durch die anschließend das Alarmobjektmuster P₁ erstellt wird.

Als nächstes wird die zweite Alarmobjektgruppe G₂, die das zweite Alarmobjekt AO₂ des Alarmobjekttyps 2 (Alarmobjekt-ID 2, Alarmobjekttyp Dreieck mit Spitze nach oben) beinhaltet, betrachtet. Da es zu dem Zeitpunkt nur ein Alarmobjektmuster P₁ gibt, wird die Ähnlichkeit zwischen der zweiten Alarmobjektgruppe G₂ und dem ersten Alarmobjektmuster P₁ berechnet. Da keines der Attribute übereinstimmt, entspricht die Ähnlichkeit zwischen der zweiten Alarmobjektgruppe G₂ und dem ersten Alarmobjektmuster P₁ dem kleinstmöglichen Ähnlichkeitswert 0. Dieser Ähnlichkeitswert überschreitet nicht den vorgeschriebenen Alarmobjektgruppen-Ähnlichkeitsschwellenwert von t=0,5 und die Alarmobjektgruppe G₂ und das Alarmobjektmuster P₁ werden somit nicht als ähnlich betrachtet. Die zweite Alarmobjektgruppe G₂ wird deshalb der Wissensbasis D hinzugefügt, aus der ein zweites Alarmobjektmuster P₂, das zu diesem Zeitpunkt nur die zweite Alarmobjektgruppe G₂ umfasst, erstellt wird.

Das dritte Alarmobjekt AO₃ von Angriffserkennungssystem S_{A} ist wiederum vom Alarmobjekttyp 1 (Alarmobjekt-ID 3, Alarmobjekttyp Kreis) und in der dritten Alarmobjektgruppe G₃ gespeichert. Da es nun zwei Alarmobjektmuster P₁, P₂ gibt, wird die Ähnlichkeit zu beiden berechnet. Die Ähnlichkeit zwischen der dritten Alarmobjektgruppe G₃ und dem ersten Alarmobjektmuster P₁ ergibt den höchstmöglichen Ähnlichkeitswert von 1, da sowohl alle Attribute A, B, C in beiden vorhanden sind, als auch jeder Wert jedes Attributs (a, b, c) übereinstimmt. Die dritte Alarmobjektgruppe G₃ wird somit dem ersten Alarmobjektmuster P₁ zugeordnet. Dies geschieht, indem die Alarmobjektgruppe G₃ in der Datenbank D dem ersten Alarmobjektmuster P₁ zugeordnet wird, und dieses Alarmobjektmuster P₁ wird dann neu aus allen Alarmobjektgruppen G₁, G₃, die ihm in der Datenbank D zugeordnet sind, generiert. Da die beiden ihm zugehörigen Alarmobjektgruppen G₁, G₃ in der Datenbank D ident sind (beide Alarmobjektgruppen G₁, G₃ beinhalten jeweils einen Alarmobjekt AO₁, AO₃ des Alarmobjekttyps Kreis mit identen Attributen und Werten), bleibt das Alarmobjektmuster P₁ auch nach erneuter Generierung unverändert.

Die beiden folgenden Alarmobjektgruppen mit Alarmobjekt-ID 4 (Alarmobjekttyp Dreieck mit Spitze nach oben) und Alarmobjekt-ID 5 (Alarmobjekttyp Kreis) werden in gleicher Weise jeweils dem zweiten Alarmobjektmuster P₂ und dem ersten Alarmobjektmuster P₁ zugeordnet. Die sechste Alarmobjektgruppe G₆, die das Alarmobjekt mit Alarmobjekt-ID 6 (Alarmobjekttyp Dreieck mit Spitze nach unten) beinhaltet, weist einen anderen Wert bei Attribut Z auf, als alle bisherigen Alarmobjektgruppen.

Bei der Berechnung des Ähnlichkeitswertes zum ersten Alarmobjektmuster P₁ kommt es wie bei der zweiten Alarmobjektgruppe G₂ zu einem Ähnlichkeitswert von 0, da keines der Attribute übereinstimmt. Bei der Berechnung des Ähnlichkeitswertes zum zweiten Alarmobjektmuster P₂ jedoch stimmen zwar alle Attribute überein, nicht jedoch der Wert des Attributs Z, da im zweiten Alarmobjektmuster das Attribute den Wert z1 annimmt, in der Alarmobjektgruppe jedoch den Wert z3.

Für dieses Ausführungsbeispiel wird vereinfacht davon ausgegangen, dass sowohl eine Übereinstimmung der Attribute als auch eine Übereinstimmung der Werte gleichermaßen zum Ähnlichkeitswert beiträgt, so ergeben sich 5 von 6 möglichen Übereinstimmungen und somit ein Ähnlichkeitswert von 5/6 = 0,83. Da dieser Wert den vorgegebenen Alarmobjektgruppen-Ähnlichkeitsschwellenwert t=0,5 überschreitet und auch größer als der Ähnlichkeitswert zum ersten Alarmobjektmuster P₁ ist, wird die sechste Alarmobjektgruppe G₆ dem zweiten Alarmobjektmuster P₂ zugeordnet. Dabei wird sie in der Datenbank D dem zweiten Alarmobjektmuster P₂ zugeordnet, das zu diesem Zeitpunkt die zweite und vierte Alarmobjektgruppe G₂, G₄ umfasst. Aus diesen drei Alarmobjektgruppen G₂, G₄, G₆ wird dann das Alarmobjektmuster P₂ neu generiert.

Dabei werden alle Attribute einzeln aggregiert. Da Attribute X und Y in allen Alarmobjektgruppen in den Werten übereinstimmen, werden diese unverändert in das Alarmobjektmuster P₂ übernommen. Da das Attribut Z in den Alarmobjektgruppen G₂, G₄, G₆ zwei unterschiedliche Werte aufweist, nämlich z1 und z3, werden diese Werte als Liste im zweiten Alarmobjektmuster P₂ aufgenommen. Es ergibt sich somit zu diesem Zeitpunkt die in Fig. 9 schematisch dargestellte Struktur der Alarmobjektmuster P₁, P₂ (siehe Tabelle 3), wobei zu beachten ist, dass das repräsentative Alarmobjekt RA₂ des zweiten Alarmobjektmusters P₂ als Mischtyp dargestellt wird, der sowohl ein Dreieck mit der Spitze nach oben als auch ein Dreieck mit der Spitze nach unten enthält:

**Tabelle 3: Alarmobjektmuster P₁, P₂:**

| **Alarmobjektmuster-ID** | **Zeitschritt** | **Attribut 1** | **Attribut 2** | **Attribut 3** |
|---|---|---|---|---|
| 1 | * | A=a | B=b | C=c |
| 2 | * | X=x | Y=y | Z=z1,z3 |

Visuelle Darstellung der des ersten (links) und zweiten (rechts) Alarmobjektmusters P₁, P₂ siehe Fig. 9.

Die siebente Alarmobjektgruppe G₇ beinhaltet wiederum ein Alarmobjekt AO₇ des Alarmobjekttyps Kreis und wird gleichermaßen wie die vorherigen Alarmobjektgruppen G₁, G₃, die zum ersten Alarmobjektmuster P₁ zugeordnet wurden, behandelt.

Die achte Alarmobjektgruppe G₈ besitzt wiederum ein Alarmobjekt AO₈ des Alarmobjekttyps Dreieck mit Spitze nach rechts, der einen neuen Wert für Attribut Z innehat. Wie vorhin ist die Ähnlichkeit zum ersten Alarmobjektmuster P₁ gleich 0. Wäre der Wert für das Attribut Z entweder z1 oder z3, so würde die Ähnlichkeit zum zweiten Alarmobjektmuster P₂ gleich 1 betragen, da sowohl z1 als auch z3 in Alarmobjektmuster bei Attribut Z vorhanden sind, und somit beide Werte als Übereinstimmung akzeptiert werden würden. Da jedoch in der achten Alarmobjektgruppe G₈ das Attribut Z den Wert z2 annimmt, beträgt die Ähnlichkeit wie vorhin 0,83. Somit wird auch diese Alarmobjektgruppe G₈ in der Datenbank D dem zweiten Alarmobjektmuster P₂ zugeordnet und das Alarmobjektmuster P₂ neu generiert. Die Attribute X und Y bleiben wie vorhin unverändert, nur bei Attribut Z sind nun drei verschiedene Werte vorhanden. Da die Maximalgröße der Liste an Werten, die einem Attribut eines repräsentativen Alarmobjekts RA zugeordnet werden können, mit 2 festgelegt wurde, wird der Wert des Attributs Z mit einem Platzhalter, symbolisiert durch einen Stern, ersetzt. Von nun an führt jeder Wert des Attributs Z zu einer Übereinstimmung.

Als nächstes wird die sechzehnte Alarmobjektgruppe G₁₆, die ein Alarmobjekt AO₁₆ des Alarmobjekttyps Dreieck mit Spitze nach links beinhaltet und die in Alarmerkennungssystem S_{B} auftritt, betrachtet, die in Alarmerkennungssystem S_{B} auftritt. Die Ähnlichkeit zum ersten Alarmobjektmuster P₁ beträgt wie bei anderen Alarmobjektgruppen des Alarmobjekttyps 2 gleich 0.

Beim Vergleich mit dem zweiten Alarmobjektmuster P₂ fällt auf, dass wiederum ein neuer Wert für das Attribut Z, nämlich z4, auftritt. Da jedoch der zweite Alarmobjektmuster P₂ bereits für das Attribut Z über einen Platzhalter verfügt und somit der Wert z4 zu einer Übereinstimmung führt, sowie auch alle anderen Attribute und Werte übereinstimmen, ist die Ähnlichkeit zwischen der sechzehnten Alarmobjektgruppe G₁₆ und dem zweiten Alarmobjektmuster P₂ gleich 1. Die Alarmobjektgruppe G₁₆ wird demnach in der Datenbank D dem zweiten Alarmobjektmuster P₂ hinzugefügt. Bei der Neugenerierung des zweiten Alarmobjektmusters P₂ entsteht für das Attribut Z wiederum ein Platzhalter, da nun bereits vier verschiedene Werte in den in der Datenbank D gespeicherten zugehörigen Alarmobjektgruppen vorhanden sind.

Diese Prozedur wird für alle restlichen Alarmobjektgruppen G fortgesetzt, wobei sich die Alarmobjektmuster P₁, P₂ nicht weiter ändern. Aufgrund der hohen Ähnlichkeit von Alarmobjekten des Alarmobjekttyps 1, der hohen Ähnlichkeit von Alarmobjekten des Alarmobjekttyps 2, und der hohen Unähnlichkeit zwischen Alarmobjekten des Alarmobjekttyps 1 und Alarmobjekten des Alarmobjekttyps 2, existieren nach Bearbeitung aller restlichen Alarmobjekte zwei Alarmobjektmuster P₁, P₂, dabei steht jeweils ein Alarmobjektmuster für einen Alarmobjekttyp. Die Alarmobjektmuster P₁, P₂ sind wie in Tabelle 4 zusammengefasst:

**Tabelle 4: Alarmobjektmuster P₁, P₂:**

| **Alarmobjektmuster-ID** | **Zeitschritt** | **Attribut 1** | **Attribut 2** | **Attribut 3** |
|---|---|---|---|---|
| 1 | * | A=a | B=b | C=c |
| 2 | * | X=x | Y=y | Z=* |

Visuelle Darstellung der Alarmobjektmuster P₁, P₂ siehe Fig. 10.

In dieser, oben angeführten, detaillierten Beschreibung des zweiten Ausführungsbeispiels wurden unbeschränkt befüllbaren Listen verwendet.

Beispielhaft wird die Vorgehensweise nun auch für die beiden anderen zuvor erwähnten Strategien der Alarmobjektgruppenspeicherung erklärt. Bei der Strategie der linear befüllbaren Listen wird ein Fixwert für die maximale Alarmobjektgruppengröße vorgegeben. Ist dieser Fixwert größer als die maximal erreichte Alarmobjektgruppengröße, so gibt es keinen Unterschied zur Strategie der unbeschränkt befüllbaren Listen. Im vorher erklärten Anwendungsbeispiel entspricht das einem Fixwert von 12 oder mehr, da am Ende des Beispiels beide Alarmobjektmuster P₁, P₂ über Listen der Größe 12 in der Datenbank D verfügen.

Beispielhaft wird der Fixwert der Maximalgrößen der Listen mit 4 angenommen. Da der Alarmobjekttyp 1 wie im vorher erklärten zweiten Ausführungsbeispiel ersichtlich keinen Änderungen unterworfen ist, wird nur der Alarmobjekttyp 2 betrachtet. Zunächst wird die linear befüllbare Liste solange befüllt, bis der Maximalwert erreicht ist. Das ist der Fall, sobald die dem zweiten Alarmobjektmuster P₂ zugehörige Liste die Alarmobjektgruppen beinhaltet, die jeweils Alarmobjekte mit Alarmobjekt-ID 2, 4, 6, und 8 umfassen. Da die Vorgehensweise bis zu diesem Zeitpunkt gleich wie die Vorgehensweise mit unbeschränkt befüllbaren Listen ist, existiert zu diesem Zeitpunkt das zweite Alarmobjektmuster mit einem Platzhalter für Attribut Z.

Sobald das Alarmobjekt AO₁₀ mit Alarmobjekt-ID 10 prozessiert wird, wird dieses, da es aufgrund des Platzhalters im zweiten Alarmobjektmuster P₂ eine perfekten Ähnlichkeitswert von 1 erreicht, zu der dem zweiten Alarmobjektmuster P₂ zugehörigen Liste an Alarmobjektgruppen hinzugefügt, die damit allerdings den Maximalwert der Listen überschreitet. Wie von der Strategie für linear befüllbare Listen vorgeschrieben, wird die älteste Alarmobjektgruppe, also die Alarmobjektgruppe die das Alarmobjekt mit Alarmobjekt-ID 2 umfasst, aus der Liste entfernt, sodass die resultierende Liste wieder eine Größe von 4 erreicht. Wird nun der zweite Alarmobjektmuster P₂ anhand dieser Alarmobjektgruppen aktualisiert, so besitzt der resultierende Alarmobjektmuster P₂ nach wie vor einen Platzhalter für Attribut Z, da für dieses Attribut drei verschiedene Werte vorkommen.

Dieses Vorgehen kann nun auch für alle restlichen Alarmobjekte AO durchgeführt werden. Die folgende Aufzählung (siehe Tabelle 5) zeigt dabei in jeder Zeile die in den Listen gespeicherten Alarmobjekte, wobei zur einfacheren Darstellung nur die Alarmobjekt-ID und die Richtung des Dreiecks von Alarmobjekttyp 2 genannt wird, und die damit einhergehende Veränderung des zweiten Alarmobjektmusters:

**Tabelle 5: Attribute von Alarmobjektmuster P₂ und Listeneinträge**

| | Listeneinträge (nur Alarmobjekttyp 2) | | | | Attribute von zweitem Alarmobjektmuster P₂ | | |
|---|---|---|---|---|---|---|---|
| Zeitschritt | 1. | 2. | 3. | 4. | X | Y | Z |
| 3 | 2 (oben) | - | - | - | x | y | z1 |
| 9 | 2 (oben) | 4 (oben) | - | - | x | y | z1 |
| 34 | 2 (oben) | 4 (oben) | 6 (unten) | - | x | y | z1, z3 |
| 40 | 2 (oben) | 4 (oben) | 6 (unten) | 8 (rechts) | x | y | * |
| 113 | 4 (oben) | 6 (unten) | 8 (rechts) | 10 (oben) | x | y | * |
| 119 | 6 (unten) | 8 (rechts) | 10 (oben) | 12 (oben) | x | y | * |
| 145 | 8 (rechts) | 10 (oben) | 12 (oben) | 14 (unten) | x | y | * |
| 151 | 10 (oben) | 12 (oben) | 14 (unten) | 16 (links) | x | y | * |
| 217 | 12 (oben) | 14 (unten) | 16 (links) | 18 (oben) | x | y | * |
| 223 | 14 (unten) | 16 (links) | 18 (oben) | 20 (oben) | x | y | * |
| 249 | 16 (links) | 18 (oben) | 20 (oben) | 22 (unten) | x | y | * |
| 255 | 18 (oben) | 20 (oben) | 22 (unten) | 24 (unten) | x | y | z1, z3 |

Obenstehende Aufzählung zeigt, dass sich über lange Zeit (Zeitschritte 40-249) das zweite Alarmobjektmuster P₂ mit einem Platzhalter für Attribut Z ergibt. Jedoch wird in Zeitschritt 255 dieser Platzhalter wieder durch eine Liste ersetzt, da die vier, in der dem Alarmobjektmuster P₂ zugehörigen Liste gespeicherten, Alarmobjektgruppen nur Alarmobjekte beinhalten, die bei Attribut zwei verschiedene Werte, z1 und z3, annehmen, und somit nicht die notwendige Diversität erreichen, um durch einen Platzhalter ersetzt zu werden.

In manchen Fällen ist dieser Effekt vorteilhaft, da dadurch erreicht wird, dass möglicherweise inkorrekt hinzugefügte Alarmobjektgruppen aus dem Alarmobjektmuster P₂ herausaltern. In diesem Fall jedoch hat sich der Platzhalter über lange Zeit und mehrere Hinzufügeoperationen von Alarmobjektgruppen als korrekt erwiesen und sollte somit beibehalten werden. Dies kann erreicht werden, indem die maximale Größe der Listen erhöht wird, zum Beispiel von 4 auf 5, wodurch ausreichend große Diversität von Attributen erreicht wird.

Als nächstes wird die Strategie der logarithmisch befüllbaren Listen diskutiert. Wie bei der Strategie der linear befüllbaren Listen, wird die maximale Größe der Listen mit 4 festgelegt. Da es sich um eine auf dem Zufall basierende Auswahl von Alarmobjektgruppen handelt, kann nur ein beispielhafter Prozessablauf gezeigt werden. Das Hinzufügen der Alarmobjektgruppen und beinhalteten Alarmobjekte mit Alarmobjekt-ID 2, 4, 6, und 8 zu der dem zweiten Alarmobjektmuster zugehörigen Liste ist ident zu den anderen Strategien. Das Hinzufügen der Alarmobjektgruppe, die Alarmobjekt mit Alarmobjekt-ID 10 beinhaltet, könnte die zuletzt hinzugefügte Alarmobjektgruppe ersetzen, da dies in 50% aller Fälle geschieht.

In dem Fall verändert sich Attribut Z im Alarmobjektmuster zu einer Liste die z1 und z3 beinhaltet, da der Wert z2 überschrieben wurde. Die Alarmobjektgruppe, die Alarmobjekt mit Alarmobjekt-ID 12 beinhaltet, könnte die letzten beiden Alarmobjektgruppen in Richtung der ersten Position verschieben und an der letzten Position eingefügt werden, da dies in 12,5% aller Fälle geschieht. Die Alarmobjektgruppe, die das Alarmobjekt mit Alarmobjekt-ID 13 beinhaltet, könnte die letzte Alarmobjektgruppe in Richtung der ersten Position verschieben und an der letzten Position eingefügt werden, da dies in 25% aller Fälle geschieht. Die folgende Tabelle 6 stellt diese und darauffolgende Operationen dar:

**Tabelle 6: Attribute von Alarmobjektmuster P₂ und Listeneinträge**

| | Listeneinträge (nur Alarmobjekttyp 2) | | | | Attribute von zweitem Alarmobjektmuster P₂ | | |
|---|---|---|---|---|---|---|---|
| Zeitschritt | 1. | 2. | 3. | 4. | X | Y | Z |
| 3 | 2 (oben) | - | - | - | x | y | z1 |
| 9 | 2 (oben) | 4 (oben) | - | - | x | y | z1 |
| 34 | 2 (oben) | 4 (oben) | 6 (unten) | - | x | y | z1, z3 |
| 40 | 2 (oben) | 4 (oben) | 6 (unten) | 8 (rechts) | x | y | * |
| 113 | 2 (oben) | 4 (oben) | 6 (unten) | 10 (oben) | x | y | z1, z3 |
| 119 | 2 (oben) | 6 (unten) | 10 (oben) | 12 (oben) | x | y | z1, z3 |
| 145 | 2 (oben) | 6 (unten) | 10 (oben) | 14 (unten) | x | y | z1, z3 |
| 151 | 2 (oben) | 6 (unten) | 10 (oben) | 16 (links) | x | y | * |
| 217 | 6 (unten) | 10 (oben) | 16 (links) | 18 (oben) | x | y | * |
| 223 | 6 (unten) | 10 (oben) | 16 (links) | 20 (oben) | x | y | * |
| 249 | 6 (unten) | 16 (links) | 20 (oben) | 22 (unten) | x | y | * |
| 255 | 6 (unten) | 16 (links) | 20 (oben) | 24 (unten) | x | y | * |

Wie in der Auflistung zu sehen ist, besteht die Liste der dem zweiten Alarmobjektmuster zugeordneten Alarmobjektgruppen aus verschiedenen Alarmobjektgruppen, die über einen langen Zeitraum aufgetreten sind. Insbesondere befinden sich eine Alarmobjektgruppe von System A und drei Alarmobjektgruppen von System B in dieser Wissensbasis. Somit stellt diese Liste eine Stichprobe dar, die repräsentativer für systemübergreifende Alarmobjektgruppen ist, als eine linear befüllbare Liste, und hat den Vorteil einer geringeren Rechenlaufzeit sowie geringeren benötigten Speicherbedarf als eine unbeschränkte Liste. Da es sich um eine statistische Befüllung der Liste handelt, ist jedoch nicht garantiert, dass die resultierenden Alarmobjektmustere in jeder Ausführung ident sind.

Aus Gründen der Einfachheit wird im Folgenden ausschließlich die Strategie der unbeschränkten Listen erklärt. Die anderen Strategien können analog zum vorher erklärten Beispiel angewandt werden. Als nächstes wird die Zeitspanne 10 Sekunden betrachtet, die in Abb. Fig. 5 dem kleinen zeitlichen Abstandsschwellenwert δₛₘₐₗₗ entspricht. Für diese Zeitspanne werden die zuvor gefundenen Alarmobjektmuster nicht berücksichtigt.

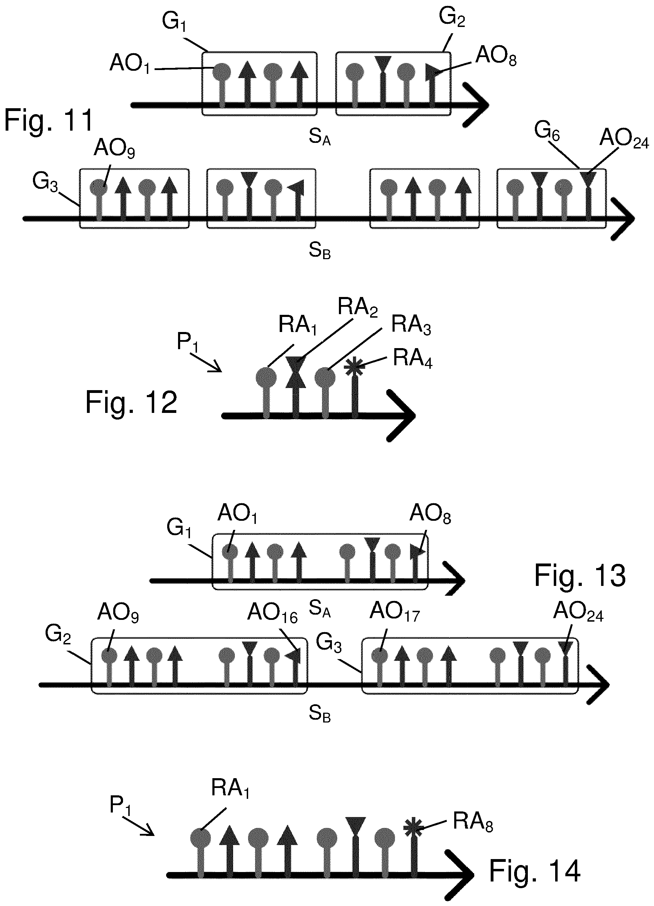

Alarmobjekte, die sich in einem Abstand von weniger als 10 Sekunden zu einem anderen Alarmobjekt oder einer Alarmobjektgruppe befinden, werden in einer oder dieser Alarmobjektgruppe zusammengefasst. Es entstehen somit zwei Alarmobjektgruppen G₁, G₂ in Angriffserkennungssystem S_{A} und vier Alarmobjektgruppen G₃, ..., G₆ in Angriffserkennungssystem S_{B}, die jeweils vier Alarmobjekte AO umfassen. Die Alarmobjektgruppen G₁, ..., G₆ sind in Fig. 11 abgebildet.

Am Beginn des Ablaufs eines erfindungsgemäßen Verfahrens sind wiederum keine Alarmobjektmuster P vorhanden. Die erste Alarmobjektgruppe G₁, die Alarmobjekte AO₁, ..., AO₄ mit Alarmobjekt-ID 1 bis 4 umfassen, wird deshalb in eine neue Datenbank D eingefügt (Schritt (1) in Fig. 5), und ein neues Alarmobjektmuster P₁ wird aus dieser Alarmobjektgruppe G₁ generiert (Schritt (2) in Fig. 5).

Die zweite Alarmobjektgruppe G₂ umfasst Alarmobjekte AO₅, ..., AO₈ mit Alarmobjekt-ID 5 bis 8 und wird mit dem Alarmobjektmuster P₁ verglichen (Schritt (3) in Fig. 5). Da die Alarmobjektgruppe G₂ und das Alarmobjektmuster P₁ jeweils mehrere Alarmobjekte AO₅, ..., AO₈ bzw. repräsentative Alarmobjekte RA₁, ..., RA₄ aufweisen, wird zunächst eine Zuordnung zwischen den Alarmobjekten AO₅, ..., AO₈ und repräsentativen Alarmobjekten RA₁, ..., RA₄ gesucht, die auf der Ähnlichkeit der Alarmobjekte basiert.

Unter der Annahme, dass das erste Alarmobjekt AO₅ der zweiten Alarmobjektgruppe G₂ mit dem ersten repräsentativen Alarmobjekt RA₁ des Alarmobjektmusters P₁ verglichen wird, das zweite Alarmobjekt AO₆ der zweiten Alarmobjektgruppe G₂ mit dem zweiten repräsentativen Alarmobjekt RA₂ des Alarmobjektmusters P₁, usw., dann ergibt sich für die Paarung des ersten Alarmobjekts AO₅ der zweiten Alarmobjektgruppe G₂ mit dem ersten repräsentativen Alarmobjekt RA₁ des Alarmobjektmusters P₁ eine Ähnlichkeit von 1, da alle Attribute und Werte übereinstimmen. Für die Paarung des zweiten Alarmobjekts AO₆ der zweiten Alarmobjektgruppe G₂ mit dem zweiten repräsentativen Alarmobjekt RA₂ des Alarmobjektmusters P₁ eine Ähnlichkeit von 0,83, da sich die Werte des Attributs Z unterscheiden, für die Paarung des dritten Alarmobjekts AO₇ der zweiten Alarmobjektgruppe G₂ mit dem dritten repräsentativen Alarmobjekt RA₃ des Alarmobjektmusters P₁ eine Ähnlichkeit von 1, da alle Attribute und Werte übereinstimmen, und für die Paarung des vierten Alarmobjekts AO₈ der zweiten Alarmobjektgruppe G₂ mit dem vierten repräsentativen Alarmobjekt RA₄ des Alarmobjektmusters P₁ eine Ähnlichkeit von 0,83, da sich die Werte des Attributs Z unterscheiden.

Vorteilhafterweise würden an dieser Stelle alle Paarungen, deren Ähnlichkeit einen vorgegebenen Alarmobjekt-Ähnlichkeitsschwellenwert unterschreiten, ignoriert werden, um falsche Zuordnungen und in weiterer Folge inkorrekte Alarmobjektaggregationen, die im Zuge des Zusammenfassens bzw. Aggregierens von Alarmobjektgruppen durchgeführt werden und zu übergeneralisierten Alarmobjekten führen, zu vermeiden.

Die Ähnlichkeit der zweiten Alarmobjektgruppe G₂ zum Alarmobjektmuster P₁ wird beispielsweise als Durchschnitt der Ähnlichkeiten der Paarungen berechnet, also (1+0,83+1+0,83)/4 = 0,92. Da diese Ähnlichkeit den Schwellenwert von 0,5 übersteigt, wird die zweite Alarmobjektgruppe G₂ in der Datenbank D dem Alarmobjektmuster P₁ zugeordnet (Schritt (4) in Fig. 5) und das Alarmobjektmuster P₁ wird neu generiert (Schritt (5) in Fig. 5, wobei zu diesem Zeitpunkt nur die erste und zweite Alarmobjektgruppe G₁, G₂ in der Datenbank D vorhanden sind). Dabei wird beim zweiten repräsentativen Alarmobjekt RA₂ des Alarmobjektmusters P₁ für das Attribut Z eine Liste erzeugt, nämlich Z=z1,z3, da die zweiten Alarmobjekte der ersten und zweiten Alarmobjektgruppe G₁, G₂ jeweils die Werte z1 und z3 in Attribut Z annehmen und sich somit unterscheiden, sowie beim vierten repräsentative Alarmobjekt RA₄ des Alarmobjektmusters P₁ für das Attribut Z eine Liste erzeugt, nämlich Z=z1 ,z2, da die vierten Alarmobjekte der ersten und zweiten Alarmobjektgruppe G₁, G₂ jeweils die Werte z1 und z2 in Attribut Z annehmen und sich somit unterscheiden.

Es wird gleichermaßen für alle Alarmobjektgruppen G₃, ..., G₆ des Alarmerkennungssystems S_{B} fortgefahren (wiederholtes Ausführen der Schritte (3)-(5) in Fig. 5, wobei jeweils die zu dem Zeitpunkt prozessierte Alarmobjektgruppe G₃, ..., G₆ verglichen und der Datenbank D hinzugefügt wird). Es zeigt sich, dass die Ähnlichkeiten aller Alarmobjektgruppen G₃, ..., G₆ zum Alarmobjektmuster P₁ den Alarmobjektgruppen-Ähnlichkeitsschwellenwert überschreiten, und somit alle Alarmobjektgruppen G₃, ..., G₆ in der Datenbank D des Alarmobjektmusters P₁ zugeordnet werden.

Auffallend ist, dass alle weiteren Alarmobjektgruppen G₃, ..., G₆ des Alarmerkennungssystems S_{B} für das zweite Alarmobjekt einen der Werte z1 und z3 im Attribut Z annehmen. Somit wird die Maximalgröße der Liste der aggregierten Alarmobjektgruppen des Alarmobjektmusters P₁ nicht überschritten. Anders ist es bei dem vierten Alarmobjekt in allen Alarmobjektgruppen G₃, ..., G₆ wo alle Werte z1, z2, z3, und z4 im Attribut Z angenommen werden. Dementsprechend wird dieser Wert wieder mit einem Platzhalter ersetzt. Es ergibt sich also nur ein Alarmobjektmuster P₁ (siehe Fig. 12), das wie in Tabelle 7 zusammengefasst lautet.

**Tabelle 7: Alarmobjektmuster P₁:**

| **Alarmobjektmuster-ID** | **Zeitschritt** | **Attribut 1** | **Attribut 2** | **Attribut 3** |
|---|---|---|---|---|
| 1 | * | A=a | B=b | C=c |
| 1 | * | X=x | Y=y | Z=z1,z3 |
| 1 | * | A=a | B=b | C=c |
| 1 | * | X=x | Y=y | Z=* |

Visuelle Darstellung des Alarmobjektmusters siehe Fig. 12 (entspricht dem Alarmobjektmuster des kleinen zeitlichen Abstandsschwellenwert δₛₘₐₗₗ in Abb. Fig. 5).

Abschließend werden die Alarmobjektgruppen für die Zeitspanne 50 Sekunden betrachtet. Dies entspricht dem großen zeitlichen Abstandsschwellenwert δ_{large} in Fig. 5. In Angriffserkennungssystem S_{A} ergibt sich nur eine einzige Alarmobjektgruppe G₁, in Angriffserkennungssystem S_{B} ergeben sich zwei Alarmobjektgruppen G₂, G₃. Die Alarmobjektgruppen G₁, ..., G₃ sind in Fig. 13 dargestellt.

Zuerst wird die erste und einzige Alarmobjektgruppe G₁ von Angriffserkennungssystem S_{A} der Datenbank D hinzugefügt und anhand der Alarmobjektgruppe G₁ ein neues Alarmobjektmuster P₁ generiert, da es wie vorhin zu diesem Zeitpunkt noch kein Alarmobjektmuster gibt.

Danach wird für die erste Alarmobjektgruppe G₂ von Angriffserkennungssystem S_{B} die Ähnlichkeit zum Alarmobjektmuster P₁ berechnet. Es ist in Fig. 13 ersichtlich, dass die ersten sieben Alarmobjekte AO₉, ..., AO₁₅ der zweiten Alarmobjektgruppe G₂ und die ersten sieben Alarmobjekte AO₁, ..., AO₇ des Alarmobjektmusters P₁, das zu diesem Zeitpunkt der ersten und einzigen Alarmobjektgruppe G₁ von Angriffserkennungssystem S_{A} entspricht, einander entsprechen und somit jeweils in bestmöglichen Ähnlichkeiten, d.h., jeweils einer Ähnlichkeit von 1, zwischen diesen Alarmobjekten resultieren.

Das achte repräsentative Alarmobjekt RA₈ des Alarmobjektmusters P₁, das dem achten Alarmobjekt AO₈ der Alarmobjektgruppe G₁ entspricht, ist vom Alarmobjekttyp Dreieck mit der Spitze nach rechts, während das achte Alarmobjekt AO₁₆ der ersten Alarmobjektgruppe G₂ von Angriffserkennungssystem S_{B} vom Typ Dreieck mit Spitze nach links ist. Wie vorhin wird die Ähnlichkeit dieser Alarmobjekte AO₈, AO₁₆ mit 0,83 beziffert.

Der Durchschnitt über alle Alarmobjekte AO₁, ..., AO₈; AO₉, ..., AO₁₆ und somit die Ähnlichkeit der Alarmobjektgruppen G₁, G₂ beläuft sich auf (1+1+1+1+1+1+1+0,83)/8 = 0,98. Da diese Ähnlichkeit den Schwellenwert von 0,5 überschreitet, wird die erste Alarmobjektgruppe G₂ von Angriffserkennungssystem S_{B} in der Datenbank D dem Alarmobjektmuster P₁ zugeordnet. Wie vorhin wird das Alarmobjektmuster P₁ neu generiert, wobei der achte repräsentative Alarmobjekt RA₈ als Mischtyp des Dreiecks mit der Spitze nach rechts und des Dreiecks mit der Spitze nach links erzeugt wird.

Die zweite Alarmobjektgruppe G₃ von Angriffserkennungssystem S_{B} wird analog behandelt. Da sich wiederum diese Alarmobjektgruppe G₃ mit dem Alarmobjektmuster P₁ nur an der achten Position der Alarmobjektsequenz unterscheidet, wird erneut eine Ähnlichkeit von 0,98 erreicht. Die Alarmobjektgruppe G₃ wird also in der Datenbank D dem Alarmobjektmuster P₁ zugeordnet und das Alarmobjektmuster P₁ besitzt nach Neugenerierung an der achten Position der Alarmobjektsequenz ein repräsentatives Alarmobjekt RA₈ vom Alarmobjekttyp Dreieck (siehe Fig. 14), wobei das Attribut Z als Platzhalter vorhanden ist, da sich bereits drei verschiedene Werte in den achten Positionen der Alarmobjektsequenzen der drei Alarmobjektgruppen G₁, ..., G₃ in der Datenbank D befinden.

Wie vorhin bildet sich nach Prozessierung aller Alarmobjektgruppen G₁, ..., G₃ also nur ein einziges Alarmobjektmuster P₁, da alle Alarmobjektgruppen die notwendige Ähnlichkeit zu dem schrittweise generierten Alarmobjektmuster P₁ erreichen. Das Alarmobjektmuster P₁ ist in Fig. 14 und Tabelle 8 dargestellt.

**Tabelle 8: Schrittweise Erstellung des Alarmobjektmusters P₁:**

| **Meta-ID** | **Zeitschritt** | **Attribut 1** | **Attribut 2** | **Attribut 3** |
|---|---|---|---|---|
| 1 | * | A=a | B=b | C=c |
| 1 | * | X=x | Y=y | Z=z1 |
| 1 | * | A=a | B=b | C=c |
| 1 | * | X=x | Y=y | Z=z1 |
| 1 | * | A=a | B=b | C=c |
| 1 | * | X=x | Y=y | Z=z3 |
| 1 | * | A=a | B=b | C=c |
| 1 | * | X=x | Y=y | Z=* |

Visuelle Darstellung des Alarmobjektmusters siehe Fig. 14 (entspricht dem Alarmobjektmuster des großen zeitlichen Abstandsschwellenwert δ_{large} in Abb. Fig. 5).

Es ist anzumerken, dass sich die erstellten Alarmobjektmuster P stark unterscheiden können, je nachdem, welcher zeitliche Abstandsschwellenwert δ gewählt wird. Das betrifft sowohl die Anzahl der Alarmobjekte AO im Alarmobjektmuster P, als auch deren Attribute nach der Aggregation. Es ist daher vorteilhaft, mehrere zeitliche Abstandsschwellenwert δ parallel anzuwenden, um von verschiedenen Angriffstypen unterschiedliche Arten von Alarmobjektmustern P abzuleiten, um somit die Wahrscheinlichkeit zu erhöhen, dass zumindest eines dieser Alarmobjektmuster P ermöglicht, ein konkretes Vorkommen eines ähnlichen oder variierten Angriffs wiederzuerkennen.

Dies beendet das zweite Ausführungsbeispiel eines beispielhaften Prozessablaufs eines erfindungsgemäßen Verfahrens. Um das Ausführungsbeispiel simpel zu halten, wurden Alarmobjekte AO mit einem einfachen Aufbau verwendet, insbesondere mit jeweils drei Attributen, wobei zwei Attribute bei jedem Alarmobjekttyp konstant sind. Weiters treten alle Alarmobjekte AO in der korrekten Reihenfolge auf, um die Zuordnungen zu vereinfachen. Um zusätzlich die Berechnung der Ähnlichkeit zwischen Alarmobjekten AO und Alarmobjektgruppen G sowie die Aggregation von Alarmobjekten AO und Alarmobjektgruppen G im Detail zu erklären, werden im Folgenden beispielhaft die Ähnlichkeitsmetriken und Zusammenfassungs- bzw. Aggregationsmethoden erklärt. Dabei sind die genannten Ausführungsbeispiele unabhängig von den zuvor erklärten Ausführungsbeispielen.

### Ausführungsbeispiel - Ähnlichkeitsmetrik für Alarmobjekte

Im Folgenden wird eine beispielhafte Ähnlichkeitsmetrik für Alarmobjekte AO erklärt. Alarmobjekte AO werden als semi-strukturierte Objekte angesehen. Eine semi-strukturierte Darstellung von Alarmobjekten AO ist auch in der Praxis üblich (siehe z.B. OSSEC Alarme im JSON Format (https://ossec-docs.readthedocs.io/en/latest/docs/formats/alerts.html#sample-alerts-json-messages, zuletzt aufgerufen am 17.11.2020).

Sollten Alarmobjekte AO in strukturierter Form vorliegen, lässt sich die Metrik ebenfalls anwenden, da jedes strukturierte Alarmobjekt AO auch als semi-strukturiertes Alarmobjekt AO darstellbar ist.

Entsprechend der semi-strukturierten Eigenschaften werden im Folgenden Alarmobjekte AO als Objekte dargestellt, die über eine bestimmte Anzahl an Attributen verfügen, wobei zu jedem Attribut ein bestimmter Wert gespeichert wird. Werte können dabei entweder simple Werte wie Zahlen oder Zeichenketten darstellen, oder komplexe Strukturen annehmen, wie Listen von Zahlen oder Zeichenketten, die mit eckigen Klammern gekennzeichnet sind, oder auch verschachtelte Objekte, die mit geschwungenen Klammer gekennzeichnet sind.

Weiters ist es möglich, dass Attribute die vorher erwähnten Strukturen von aggregierten Listen, die mit spitzen Klammern gekennzeichnet sind, und Platzhalter, die mit einem Stern gekennzeichnet sind, speichern. Im Folgenden werden zwei Beispiel Alarmobjekte Alarmobjekt1 (AO₁) und Alarmobjekt2 (AO₂) betrachtet, die verschiedene dieser Attribute beinhalten.

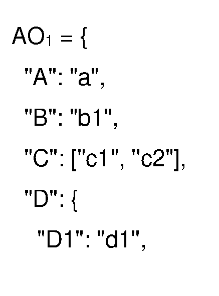

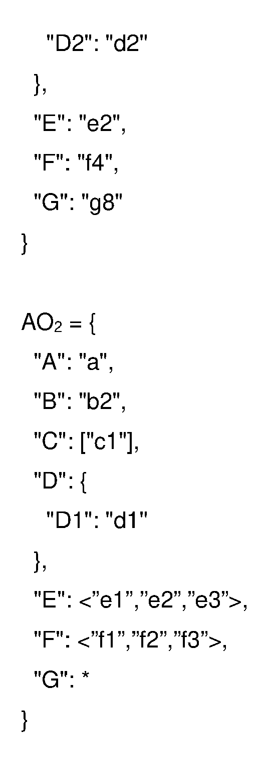

Die Ähnlichkeit zwischen AO₁ und AO₂ soll bestimmt werden. Die Ähnlichkeitsmetrik vergleicht dazu alle Attribute der beiden Alarmobjekte AO₁ und AO₂ und zählt dazu die Anzahl der Übereinstimmungen sowie die Anzahl der Unterschiede.

Das Attribut A ist in beiden Alarmobjekten AO₁ und AO₂ vorhanden und besitzt den gleichen Wert a, die Anzahl der Übereinstimmungen erhöht sich um 1 auf 1. Das Attribut B ist in beiden Alarmobjekten AO₁ und AO₂ vorhanden, nimmt allerdings den Wert b1 in Alarmobjekt1 und b2 in Alarmobjekt AO₂ an. Deshalb erhöht sich die Anzahl der Unterschiede um 1 auf 1.

Das Attribut C ist in beiden Alarmobjekten AO₁ und AO₂ vorhanden, ist jedoch eine Liste mit zwei Elementen in Alarmobjekt AO₁ und eine Liste mit nur einem Element in Alarmobjekt AO₂. Da ein Element der Liste, c1, in beiden Alarmobjekten AO₁ und AO₂ übereinstimmt, und somit die Hälfte der Liste übereinstimmt, werden die Übereinstimmungen um 0,5 auf 1,5 erhöht. Da ein Element der Liste in Alarmobjekt AO₁ nicht in der Liste von Alarmobjekt AO₂ vorhanden ist, und somit die Hälfte der Liste nicht übereinstimmt, wird die Anzahl der Unterschiede um 0,5 auf 1,5 erhöht.

Das Attribut D ist in beiden Alarmobjekten AO₁ und AO₂ ein verschachteltes Objekt. Jedes Attribut im verschachtelten Objekt wird als normales Attribut gehandhabt. Das Attribut D1 ist in beiden Alarmobjekten AO₁ und AO₂ vorhanden und besitzt den gleichen Wert d1, die Anzahl der Übereinstimmungen erhöht sich um 1 auf 2,5. Das Attribut D2 ist nur in Alarmobjekt AO₁ vorhanden, nicht aber in Alarmobjekt AO₂. Um fehlende Attribute höher zu gewichten als unterschiedliche Werte bei gleichen Attributen, wird die Anzahl der Unterschiede um 1,5 auf 3 erhöht.

Das Attribut E ist in beiden Alarmobjekten AO₁ und AO₂ vorhanden, und ist in Alarmobjekt AO₂ eine aggregierte Liste. Das bedeutet, dass auch eine Teilmenge der Liste als Wert ausreicht, um als Übereinstimmung zu gelten. Da der Wert von Alarmobjekt AO₁ in Attribut E gleich e2 ist, und e2 ein Teil der Liste von Attribut E in Alarmobjekt AO₂ ist, wird die Anzahl der Übereinstimmungen um 1 auf 3,5 erhöht.

Auch das Attribut F ist in beiden Alarmobjekten AO₁ und AO₂ vorhanden und in Alarmobjekt AO₂ eine aggregierte Liste, jedoch ist der Wert f4 von Alarmobjekt AO₁ nicht in der Liste enthalten. Deshalb wird die Anzahl der Unterschiede um 1 auf 4 erhöht. Das Attribut G ist ebenfalls in beiden Alarmobjekten vorhanden und weist einen Platzhalter in Alarmobjekt AO₂ auf. Daher ist egal, welchen Wert das Attribut G in Alarmobjekt1 einnimmt, die Anzahl der Übereinstimmungen wird auf jeden Fall um 1 auf 4,5 erhöht.

Somit ist die finale Anzahl der Übereinstimmungen 4,5 und die finale Anzahl der Unterschiede 4. Die Ähnlichkeit wird durch das Verhältnis der Übereinstimmungen und der Summe der Übereinstimmungen und Unterschiede ermittelt, also 4,5/(4,5+4) = 0,53.

### Ausführungsbeispiel - Aggregationsmetrik für Alarmobjekte AO

Im Folgenden wird eine beispielhafte Aggregationsmetrik für Alarmobjekte AO erklärt. Wie vorhin sind Alarmobjekte AO semi-strukturierte Objekte. Es werden folgende Alarmobjekte betrachtet:

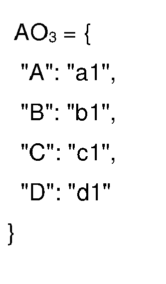

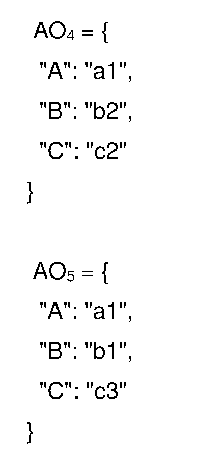

Die drei Alarmobjekte AO₃, AO₄, AO₅ sollen aggregiert werden. Dazu werden folgende Parameter verwendet. Die Maximalgröße der aggregierten Listen beträgt 2 und das minimale relative Auftreten eines Attributes beträgt 0,4.

Es werden alle Attribute getrennt betrachtet. Das Attribut A ist in allen Alarmobjekten AO₃, AO₄, AO₅ vorhanden und hat in allen Alarmobjekten AO₃, AO₄, AO₅ den gleichen Wert a1. In einem aggregierten Alarmobjekt bzw. repräsentativen Alarmobjekt RA eines Alarmobjektmusters P wird das Attribut A deshalb als aggregierte Liste mit nur einem Element a1 erzeugt.

Das Attribut B ist in allen Alarmobjekten AO₃, AO₄, AO₅ vorhanden und nimmt dabei zweimal die Werte b1 und einmal den Wert b2 an. Da somit zwei verschiedene Werte vorliegen, wird im aggregierten Alarmobjekt das Attribut B als aggregierte Liste mit den zwei Werten b1 und b2 gespeichert.

Das Attribut C ist in allen Alarmobjekten AO₃, AO₄, AO₅ vorhanden und nimmt dabei die Werte c1, c2, und c3 an. Da somit drei verschiedene Werte vorliegen, und diese Anzahl die Maximalgröße der aggregierten Listen überschreitet, wird das Attribut C mit einem Platzhalter im aggregierten Alarmobjekt hinzugefügt.

Das Attribut D kommt nur in Alarmobjekt AO₃ vor. Somit ist es nur in einem von 3 Alarmobjekten vorhanden, das heißt, die relative Häufigkeit 0,33 ist kleiner als das minimale relative Auftreten 0,4 und das Attribut wird somit nicht in das aggregierte Alarmobjekt übernommen. Das aggregierte Alarmobjekt sieht somit folgendermaßen aus:

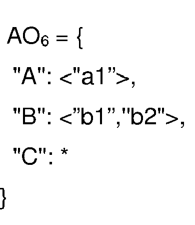

### Ausführungsbeispiel - Ähnlichkeitsmetrik für kleine Alarmobjektgruppen G

Im Folgenden wird eine Ähnlichkeitsmetrik für Alarmobjektgruppen G beispielhaft erklärt. Dafür werden die folgenden zwei Alarmobjektgruppen G₁, G₂ definiert.
G₁ = { AO₁, AO₃, AO₅}
G₂ = {AO₅, AO₂, AO₄, AO₄}

Die erste Alarmobjektgruppe G₁ besteht somit aus drei Alarmobjekten AO₁, AO₃, AO₅, die zweite Alarmobjektgruppe G₂ besteht aus vier Alarmobjekten AO₅, AO₂, AO₄, AO₄. Dabei ist Alarmobjekt AO₅ in beiden Alarmobjektgruppen G₁, G₂ vorhanden, Alarmobjekt AO₄ ist doppelt in der zweiten Alarmobjektgruppe G₂ vorhanden.

Es wird wieder die zuvor beschriebene Ähnlichkeitsmetrik verwendet, die alle Alarmobjekte AO miteinander vergleicht. Im Folgenden wird die Ähnlichkeit jeder Kombination aus Alarmobjekten AO aus den beiden Alarmobjektgruppen G₁, G₂ genannt, wobei die Ähnlichkeit zwischen AO₁ und AO₂ wie im Ausführungsbeispiel Ähnlichkeitsmetrik für Alarmobjekte durchgeführt wird, alle anderen Ähnlichkeiten analog berechnet werden, und idente Paarungen nicht doppelt genannt werden.
Ähnlichkeit von AO₁ und AO₅: 0,1
Ähnlichkeit von AO₁ und AO₂: 0,53
Ähnlichkeit von AO₁ und AO₄: 0,1
Ähnlichkeit von AO₃ und AO₅: 0,44
Ähnlichkeit von AO₃ und AO₂: 0,12
Ähnlichkeit von AO₃ und AO₄: 0,22
Ähnlichkeit von AO₅ und AO₅: 1,0
Ähnlichkeit von AO₅ und AO₂: 0,0
Ähnlichkeit von AO₅ und AO₄: 0,33

Es werden nun die besten Übereinstimmungen, d.h., die Paarungen, die die höchste Ähnlichkeit erzielen, zwischen allen Alarmobjekten AO gesucht, wobei jedes Alarmobjekt AO nur in einer Paarung auftreten darf. Dazu werden zuerst die Paarungen absteigend nach Ähnlichkeit sortiert.
Ähnlichkeit von AO₅ und AO₅: 1,0
Ähnlichkeit von AO₁ und AO₂: 0,53
Ähnlichkeit von AO₃ und AO₅: 0,44
Ähnlichkeit von AO₅ und AO₄: 0,33
Ähnlichkeit von AO₃ und AO₄: 0,22
Ähnlichkeit von AO₃ und AO₂: 0,12
Ähnlichkeit von AO₁ und AO₅: 0,1
Ähnlichkeit von AO₁ und AO₄: 0,1
Ähnlichkeit von AO₅ und AO₂: 0,0

Als nächstes wird von oben nach unten die Liste durchgegangen, und alle Paarungen entfernt, die Alarmobjekte AO beinhalten, die bereits in einer anderen Paarung vorhanden sind, wobei mehrfach auftretende Alarmobjekte AO entsprechend oft in den Paarungen vorkommen dürfen.

In diesem Fall wird die erste Paarung akzeptiert, da sie nur Alarmobjekt AO₅ umfasst, der in beiden Alarmobjektgruppen G₁, G₂ vorhanden ist. Die zweite Paarung wird ebenfalls akzeptiert, da Alarmobjekt AO₁ in Alarmobjektgruppe G₁ und Alarmobjekt AO₂ in Alarmobjektgruppe G₂ vorhanden sind.

Die dritte Paarung jedoch betrifft Alarmobjekt AO₅ in der zweiten Alarmobjektgruppe G₂, wobei dieses Alarmobjekt AO₅ schon in der ersten Paarung verwendet wurde. Deshalb wird die dritte Paarung entfernt. Selbiges gilt für die vierte Paarung. Erst die fünfte Paarung, die Alarmobjekt AO₃ in Alarmobjektgruppe G₁ und Alarmobjekt AO₄ in Alarmobjektgruppe G₂ betrifft, wird wieder akzeptiert. Da es keine weiteren noch nicht in Paarungen verwendeten Alarmobjekte in Alarmobjektgruppe G₁ gibt, kann an dieser Stelle abgebrochen werden. Die resultierenden Paarungen sind also wie folgt.
Ähnlichkeit von AO₅ und AO₅: 1,0
Ähnlichkeit von AO₁ und AO₂: 0,53
Ähnlichkeit von AO₃ und AO₄: 0,22

Weiters existiert ein zusätzlicher Alarmobjekt AO₄ in Alarmobjektgruppe G₂, der als nicht erfolgreiche Paarung mit der Ähnlichkeit 0 gilt. Die Ähnlichkeit der Alarmobjektgruppen G₁, G₂ ergibt sich aus dem Durchschnitt aller Paarungen, also (1,0+0,53+0,22+0)/4 = 0,44. Dieser Werte könnte noch modifiziert werden, indem die Reihenfolge der Paarungen berücksichtigt wird.

Da beispielsweise Alarmobjekt AO₅ in der ersten Alarmobjektgruppe G₁ an Position 3 steht, aber an Position 1 in der zweiten Alarmobjektgruppe G₂, sind zwei Verschiebungsoperationen notwendig, um die Alarmobjekte an die gleiche Position zu befördern. Da somit zwei der vier Positionen in Alarmobjektgruppe G₂ verändert werden müssen, beträgt die Ähnlichkeit der Reihenfolge nur (1-2/4)=0,5. Dieser Wert könnte gewichtet in den Alarmobjektgruppenähnlichkeitswert miteinfließen, bei einer gleich hohen Gewichtung wäre der resultierende Wert beispielsweise 0,44*0,5=0,22.

### Ausführungsbeispiel - Ähnlichkeitsmetrik für große Alarmobjektgruppen G

Da die Anzahl der Paarungen quadratisch mit den Alarmobjektgruppengrößen anwächst, ist die zuvor erklärte Ähnlichkeitsmetrik nur für kleine Alarmobjektgruppen G durchführbar. Wir erklären nun eine Ähnlichkeitsmetrik für große Alarmobjektgruppen G anhand der folgenden Alarmobjektgruppen G₃ (Alarmobjektgruppe3), G₄ (Alarmobjektgruppe4), wobei die Zahlen angeben, wie oft der jeweilige Alarmobjekt AO in der Alarmobjektgruppe G₃, G₄ vorkommt, und Paare von Zahlen angeben, in welchem Bereich die Anzahl der vorkommenden Alarmobjekte AO des jeweiligen Typs vorkommen kann, d.h., im folgenden Beispiel kommt Alarmobjekt AO₁ in Alarmobjektgruppe G₃ genau 1000 Mal vor, während Alarmobjekt AO₄ in einem Bereich zwischen 90 und 100 Mal vorkommen kann.

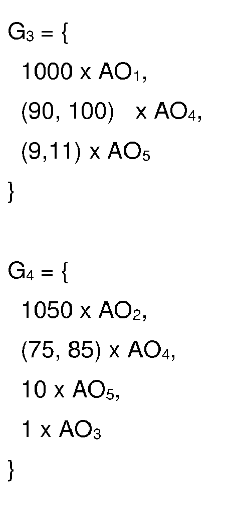

Dabei stellen die Alarmobjekte Repräsentative dar, das heißt, dass nicht notwendigerweise zum Beispiel 1000 Mal der idente Alarmobjekt AO₁ in Alarmobjektgruppe G₃ vorhanden ist, sondern 1000 Alarmobjekte AO vorhanden sind, die ausreichend ähnliche zu Alarmobjekt AO₁ sind, um gemeinsam gezählt zu werden.

Der erste Schritt, um die Ähnlichkeitsmetrik für große Alarmobjektgruppen G zu berechnen, ist das Finden von Paaren von repräsentativen Alarmobjekten. Aus vorherigen Beispielen ist bekannt, dass Alarmobjekt AO₁ in Alarmobjektgruppe G₃ und Alarmobjekt AO₂ in Alarmobjektgruppe G₄, Alarmobjekt AO₄ in Alarmobjektgruppe G₃ und Alarmobjekt AO₄ in Alarmobjektgruppe G₄, und Alarmobjekt AO₅ in Alarmobjektgruppe G₃ und Alarmobjekt AO₅ in Alarmobjektgruppe G₄ eine Paarung bilden.

Die jeweiligen Häufigkeiten der Paarungen werden verglichen, indem die Verhältnisse aus der kleineren und größeren Häufigkeit berechnet werden. Sollten Häufigkeiten als Bereiche angegeben sein, ist die Ähnlichkeit 1, wenn es eine Überschneidung gibt oder der andere Wert innerhalb des Bereichs liegt, andernfalls werden die am nächsten beieinanderliegende Werte der Bereiche für die Verhältnisbildung verwendet.
Paarung AO₁ und AO₂: 1000/1050=0,95
Paarung AO₄ und AO₄: 85/90=0,94
Paarung AO₅ und AO₅: 1,0

Es existiert keine Paarung für Alarmobjekt AO₃ in Alarmobjektgruppe G₄, die deshalb den Wert 0 zur Gesamtähnlichkeit beiträgt. Die Gesamtähnlichkeit berechnet sich wieder als Durchschnitt der Teilähnlichkeiten, also (0,95+0,94+1,0+0,0)/4 = 0,72. Wie vorhin können Verschiebungen der Reihenfolge herangezogen werden, um die Ähnlichkeit weiter zu verfeinern.

### Ausführungsbeispiel - Aggregationsmetrik zum Zusammenfassen von Alarmobjektgruppen G

Im Folgenden wird eine Aggregationsmetrik für Alarmobjektgruppen G erklärt. Die dafür verwendeten Alarmobjektgruppen sind wie folgt.
G₅ = {AO₃, AO₄, AO₅, AO₅}
G₆ = {AO₄, AO₅, AO₃}
G₇ = {AO₃, AO₃, AO₁}

Wie zu sehen ist, umfasst Alarmobjektgruppe G₅ vier Alarmobjekte AO₃, AO₄, AO₅, AO₅, während Alarmobjektgruppe G₆ und Alarmobjektgruppe G₇ nur jeweils drei Alarmobjekte AO₄, AO₅, AO₃; AO₃, AO₃, AO₁ umfassen. Außerdem kommt Alarmobjekt AO₅ doppelt in Alarmobjektgruppe G₅ und Alarmobjekt AO₃ doppelt in Alarmobjektgruppe G₇ vor.

Die Alarmobjektgruppenzusammensetzungen wurden beispielhaft so gewählt, um die Aggregationsmetrik zu demonstrieren. In der Praxis wären diese Alarmobjektgruppen G vermutlich zu unähnlich, um sinnvoll zu einem einzigen Alarmobjektmuster P aggregiert zu werden.

Im Folgenden wird angenommen, dass die Mindestähnlichkeit für Alarmobjekte auf 0,2 festgesetzt wird. Zunächst wird die größte Alarmobjektgruppe G ausgewählt, da diese aufgrund der höheren Anzahl an vorhandenen Alarmobjekten die besten Möglichkeiten für alle anderen Alarmobjektgruppen bietet, gute Paarungen von Alarmobjekten zu finden. Diese Alarmobjektgruppe G ist Alarmobjektgruppe G₅.

Die erste Alarmobjektgruppe G, die mit dieser repräsentativen Alarmobjektgruppe abgeglichen wird, ist Alarmobjektgruppe G₆. Es werden analog zur Ähnlichkeitsmetrik für kleine Alarmobjektgruppen G, die bestmöglichen Paarungen zwischen den Alarmobjektgruppen G₅, G₆ gesucht. Diese lauten wie folgt.
AO₃ aus G₅ mit AO₃ aus G₆
AO₄ aus G₅ mit AO₄ aus G₆
AO₅ aus G₅ mit AO₅ aus G₆

Somit bleibt noch ein Alarmobjekt AO₅ aus Alarmobjektgruppe G₅ übrig, das in keiner Paarung auftritt. Die Paarungen und restlichen nicht-gepaarten Alarmobjekte werden nun in Listen gespeichert, die solange erweitert werden, bis alle Alarmobjektgruppen prozessiert wurden. Dabei stehen die Alarmobjekte AO von Alarmobjektgruppe G₅ an erster Stelle der Listen. Zu diesem Zeitpunkt sehen die Listen wie folgt aus:
(AO₃, AO₃)
(AO₄, AO₄)
(AO₅, AO₅)
(AO₅)

Es wird nun Alarmobjektgruppe G₇ mit Alarmobjektgruppe G₅ abgeglichen. Dabei entstehen folgende Paarungen:
AO₃ aus G₅ mit AO₃ aus G₇
AO₅ aus G₅ mit AO₃ aus G₇

Das Paar Alarmobjekt AO₄ aus Alarmobjektgruppe G₅ mit Alarmobjekt AO₃ aus Alarmobjektgruppe G₅ wird nicht gebildet, da es eine geringere Ähnlichkeit als das Paar Alarmobjekt AO₅ aus Alarmobjektgruppe G₅ mit Alarmobjekt AO₃ aus Alarmobjektgruppe G₇ aufweist.

Es wird kein Paar mit Alarmobjekt AO₁ aus Alarmobjektgruppe G₇ gefunden, da es keine Kombination gibt, die eine Ähnlichkeit ergibt, die über der Mindestähnlichkeit für Alarmobjekte liegt. Somit wird Alarmobjekt AO₁ als eigene Liste zu den aktuellen Listen hinzugefügt. Die erweiterten Listen ergeben sich, indem man die neuen Paarungen zu den jeweiligen Einträgen, die bereits von Alarmobjektgruppe G₅ ausgehend gebildet wurden, hinzufügt. Die Liste ergeben sich somit wie folgt:
(AO₃, AO₃, AO₃)
(AO₄, AO₄)
(AO₅, AO₅, AO₃)
(AO₅)
(AO₁)

Jede Liste wird nun einzeln mithilfe der zuvor beschriebenen Aggregationsmetrik für Alarmobjekte AO aggregiert. Die resultierenden aggregierten Alarmobjekte werden als Sequenz zu einer neuen Alarmobjektgruppe bzw. einem Alarmobjektmuster P gebildet. Die neue Alarmobjektgruppe lautet also wie folgt.
G₈ = {AO₇, AO₈, AO₉, AO₁₀, AO₁₁}

Wobei die Alarmobjekte wie folgt gebildet wurden.

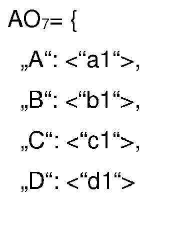

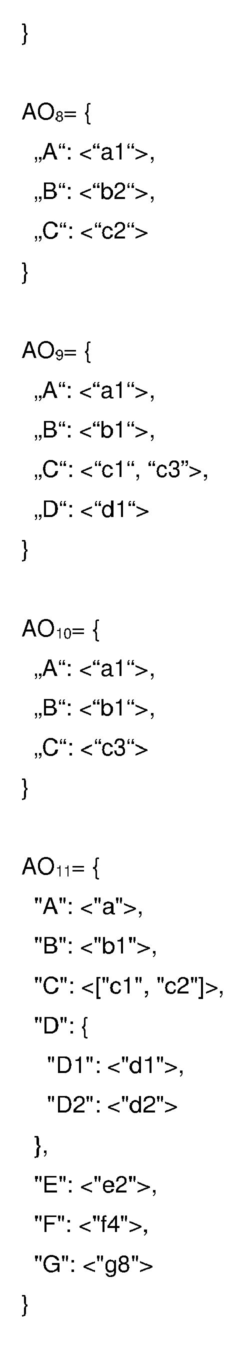

## Patentansprüche

1. Verfahren zur Klassifizierung von anomalen Betriebszuständen eines Computernetzwerks (1), die auf Variationen unterschiedlicher Angriffstypen zurückzuführen sind,
- wobei das Computernetzwerk eine Anzahl von Computern umfasst, wobei auf den Computern zumindest ein Angriffserkennungssystem (S_{A}, S_{B}) zur Erkennung von anomalen Betriebszuständen des Computers und/oder des Computernetzwerks abläuft, wobei das zumindest eine Angriffserkennungssystem (S_{A}, S_{B}) dazu ausgebildet ist, bei Eintreten von anomalen Betriebszuständen, die vorab vorgegebenen Erkennungsfällen in Form eines Angriff auf den Computer und/oder das Computernetzwerk entsprechen, Alarmobjekte (AO; AO₁, ..., AOₙ) zu erstellen, sodass derart eine Alarmobjektsequenz erzeugt wird, in der die einzelnen Alarmobjekte (AO; AO₁, ..., AOₙ) in der zeitlichen Abfolge ihres Auftretens enthalten sind,
wobei den einzelnen Alarmobjekten (AO; AO₁, ..., AOₙ) jeweils eine Anzahl von Attributen und den Attributen zugeordneten Werten, insbesondere eine Anzahl von Zahlen, Zeichenketten, Wertelisten, und/oder Objekten, zugeordnet sind, die den jeweils aufgetretenen anomalen Betriebszustand, der als einem Erkennungsfall entsprechend erkannt wurde, charakterisieren,
**dadurch gekennzeichnet,**
- **dass** die einzelnen Alarmobjekte (AO; AO₁, ..., AOₙ) der Alarmobjektsequenz nach der zeitlichen Nähe des Zeitpunkts ihrer Erstellung unter Vorgabe eines zeitlichen Abstandsschwellenwerts (δ) zu Alarmobjektgruppen (G; G₁, ..., Gₘ; G'₁, ..., G'ₘ) zusammengefasst werden, sodass die Alarmobjektgruppen jeweils Teilsequenzen der Alarmobjektsequenz umfassen,
- **dass** die einzelnen Alarmobjektgruppen (G; G₁, ..., Gₘ; G'₁, ..., G'ₘ) basierend auf der Reihenfolge, der Häufigkeit und/oder den Attributen der den jeweiligen Alarmobjektgruppen (G; G₁, ..., Gₘ; G'₁, ..., G'ₘ) zugeordneten Alarmobjekte (AO; AO₁, ..., AOₙ) nach einer vorgegebenen Ähnlichkeitsmetrik hinsichtlich ihrer Ähnlichkeit verglichen und unter Vorgabe eines Alarmobjektgruppen-Ähnlichkeitsschwellenwerts (t) aufgrund deren Ähnlichkeit nach einer vorgegebenen Aggregationsmetrik zu Alarmobjektmustern (P; P₁, ..., Pₖ) in Form von Datenobjekten zusammengefasst werden,
wobei den Alarmobjektmustern (P; P₁, ..., Pₖ) jeweils repräsentative Alarmobjekte (RA; RA₁, ..., Pₗ) zugewiesen werden, die diejenigen Alarmobjekte (AO; AO₁, ..., AOₙ), insbesondere deren Attribute und Werte, die den als ähnlich erkannten Alarmobjektgruppen (G; G₁, ..., Gₘ; G'₁, ..., G'ₘ) zugeordnet sind, repräsentieren und wobei jedem Alarmobjektmuster (P; P₁, ..., Pₖ) ein Angriffstyp zugeordnet wird, und
- **dass** diejenigen anomalen Betriebszustände, die denjenigen Alarmobjekten (AO; AO₁, ..., AOₙ) zugrunde liegen, die den zu einem jeweiligen Alarmobjektmuster (P; P₁, ..., Pₖ) zusammengefassten Alarmobjektgruppen (G; G₁, ..., Gₘ; G'₁, ..., G'ₘ) zugeordnet sind, als anomale Betriebszustände erkannt werden, die auf denjenigen Angriffstyp zurückzuführen sind, der dem jeweiligen Alarmobjektmuster (P; P₁, ..., Pₖ) zugeordnet ist.

2. Verfahren nach Anspruch 1, **dadurch gekennzeichnet,**
- **dass** eine Anzahl unterschiedlicher zeitlicher Abstandsschwellenwerte (δₛₘₐₗₗ, δ_{large}, δ₃) gleichzeitig für die Zusammenfassung zu Alarmobjektgruppen (G; G₁, ..., Gₘ; G'₁, ..., G'ₘ) herangezogen werden,
und/oder
- **dass** die einzelnen Alarmobjekte (AO; AO₁, ..., AOₙ) der Alarmsequenz nach der Ähnlichkeit der den Alarmobjekten (AO; AO₁, ..., AOₙ) zugeordneten Attribute zu Alarmobjektgruppen (G; G₁, ..., Gₘ; G'₁, ..., G'ₘ) zusammengefasst werden.

3. Verfahren nach einem der vorangehenden Ansprüche, **dadurch gekennzeichnet, dass** eine Datenbank (D) angelegt wird, wobei in der Datenbank (D) die erstellten Alarmobjektgruppen (G; G₁, ..., Gₘ; G'₁, ..., G'ₘ) und Alarmobjektmuster (P; P₁, ..., Pₖ), sowie die Zugehörigkeit der einzelnen Alarmobjektgruppen (G; G₁, ..., Gₘ; G'₁, ..., G'ₘ) zu den einzelnen Alarmobjektmustern (P; P₁, ..., Pₖ) hinterlegt werden.

4. Verfahren nach Anspruch 3, **dadurch gekennzeichnet,**
- **dass** die einzelnen Alarmobjektgruppen (G; G₁, ..., Gₘ; G'₁, ..., G'ₘ) nach deren Erstellung in der Datenbank (D) hinterlegt werden, und
- **dass** die Alarmobjektmuster (P; P₁, ..., Pₖ) auf Grundlage der in der Datenbank (D) hinterlegten Alarmobjektgruppen (G; G₁, ..., Gₘ; G'₁,..., G'ₘ) erstellt werden, wobei vorgesehen ist, dass, im Fall, dass die Datenbank (D) nur eine einzige Alarmobjektgruppe (G; G₁, ..., Gₘ; G'₁, ..., G'ₘ) enthält, ein Alarmobjektmuster (P; P₁, ..., Pₖ) erstellt wird, dessen repräsentative Alarmobjekte (RA; RA₁, ..., RAₗ) mit den Alarmobjekten (AO; AO₁, ..., AOₙ) der einzigen Alarmobjektgruppe (G; G₁, ..., Gₘ; G'₁, ..., G'ₘ) identisch sind.

5. Verfahren nach Anspruch 3 oder 4, **dadurch gekennzeichnet, dass** die Zugehörigkeit der einzelnen Alarmobjektgruppen (G; G₁, ..., Gₘ; G'₁, ..., G'ₘ) zu den einzelnen Alarmobjektmustern in Form von Listen umfassend die einem jeweiligen Alarmobjektmuster zugeordneten Alarmobjektgruppen (G; G₁, ..., Gₘ; G'₁, ..., G'ₘ) in der Datenbank hinterlegt wird, wobei Listen zumindest eines der folgenden Typen angelegt werden:
- unbeschränkte Listen,
- linear befüllbare Listen,
- logarithmisch befüllbare Listen, und
wobei vorgesehen ist, dass die Wahrscheinlichkeit einer Ersetzung eines Elements einer logarithmisch befüllbaren Liste mit absteigender Position des Elements in der logarithmisch befüllbaren Liste abnimmt.

6. Verfahren nach einem der vorangehenden Ansprüche, **dadurch gekennzeichnet, dass** die Ähnlichkeit der Alarmobjekte (AO; AO₁, ..., AOₙ) der einzelnen Alarmobjektgruppen (G; G₁, ..., Gₘ; G'₁, ..., G'ₘ) und/oder für neu erstellte Alarmobjektgruppen (G; G₁, ..., Gₘ; G'₁, ..., G'ₘ) die Ähnlichkeit mit den bereits erstellten Alarmobjektmustern (P; P₁, ..., Pₖ) berechnet wird, indem nach übereinstimmenden Attributen und/oder übereinstimmenden, den Attributen zugeordneten, Werten gesucht wird.

7. Verfahren nach Anspruch 6, **dadurch gekennzeichnet,**
- **dass** alle Attribute der hinsichtlich ihrer Ähnlichkeit zu analysierenden Alarmobjekte (AO; AO₁, ..., AOₙ) miteinander verglichen werden und jeweils die Anzahl der Übereinstimmungen und der Unterschiede der den jeweiligen Attributen zugeordneten Werte ermittelt werden und
- **dass** eine Gesamtähnlichkeit der Alarmobjekte (AO; AO₁, ..., AOₙ) innerhalb einer Alarmobjektgruppe (AO; AO₁, ..., AOₙ) als Verhältnis der ermittelten Übereinstimmungen zur Summe der Übereinstimmungen und Unterschiede ermittelt wird.

8. Verfahren nach einem der vorangehenden Ansprüche, **dadurch gekennzeichnet, dass** die als ähnlich erkannten Alarmobjektgruppen (G; G₁, ..., Gₘ; G'₁, ..., G'ₘ) zu Alarmobjektmustern (P; P₁, ..., Pₖ) zusammengefasst werden, indem
- nach einer vorgegebenen Ähnlichkeitsmetrik nach übereinstimmenden Alarmobjekten (AO; AO₁, ..., AOₙ) in den einzelnen als ähnlich erkannten Alarmobjektgruppen (G; G₁, ..., Gₘ; G'₁, ..., G'ₘ) gesucht wird, und
- die einzelnen übereinstimmenden Alarmobjekte (AO; AO₁, ..., AOₙ) zusammengefasst werden, indem jeweils die als übereinstimmend erkannten Attribute der übereinstimmenden Alarmobjekte (AO; AO₁, ..., AOₙ) herangezogen werden und ausgewählte Werte, die den als übereinstimmend erkannten Attributen in den jeweiligen Alarmobjekten (AO; AO₁, ..., AOₙ) zugeordnet sind, gemeinsam mit dem jeweiligen Attribut im entsprechenden repräsentativen Alarmobjekt (RA; RA₁, ..., RAₗ) des Alarmobjektmusters (P; P₁, ..., Pₖ) hinterlegt werden.

9. Verfahren nach Anspruch 8, **dadurch gekennzeichnet, dass** beim Zusammenfassen der einzelnen übereinstimmenden Alarmobjekte (AO; AO₁, ..., AOₙ) der Alarmobjektgruppen (G; G₁, ..., Gₘ; G'₁, ..., G'ₘ) zu Alarmobjektmustern (P; P₁, ..., Pₖ)
- Listen umfassend ausgewählte Werte, die einem als übereinstimmend erkannten Attribut in den jeweiligen übereinstimmenden Alarmobjekten (AO; AO₁, ..., AOₙ) zugeordnet sind, gemeinsam mit dem jeweiligen Attribut im jeweils entsprechenden repräsentativen Alarmobjekt (RA; RA₁, ..., RAₗ) des Alarmobjektmusters (P; P₁, ..., Pₖ) hinterlegt werden und/oder
- Platzhalter für die Werte, die einem als übereinstimmend erkannten Attribut in den jeweiligen übereinstimmenden Alarmobjekten (AO; AO₁, ..., AOₙ) zugeordnet sind, im jeweils entsprechenden repräsentativen Alarmobjekt (RA; RA₁, ..., RAₗ) des Alarmobjektmusters (P; P₁, ..., Pₖ) hinterlegt werden, wenn die Anzahl an unterschiedlichen Werten, die das jeweilige Attribut in den jeweiligen Alarmobjekten annimmt, einen vorgegebenen Maximalwert überschreitet.

10. Verfahren nach einem der vorangehenden Ansprüche, **dadurch gekennzeichnet, dass** die Ähnlichkeitsmetrik für die Suche nach übereinstimmenden Alarmobjekten (AO; AO₁, ..., AOₙ) in den Alarmobjektgruppen (G; G₁, ..., Gₘ; G'₁, ..., G'ₘ) auf zumindest einer der folgenden Vorgehensweisen beruht:
a) dass die den Alarmobjektgruppen (G; G₁, ..., Gₘ; G'₁, ..., G'ₘ) zugeordneten Alarmobjekte (AO; AO₁, ..., AOₙ) jeweils paarweise hinsichtlich deren Ähnlichkeit miteinander verglichen werden, und dass diejenigen Alarmobjektpaare ermittelt werden, deren Ähnlichkeit am größten ist, wobei vorgesehen ist, dass jedes Alarmobjekt (AO; AO₁, ..., AOₙ) nur in einem Alarmobjektpaar enthalten ist,
b) dass zunächst innerhalb der einzelnen Alarmobjektgruppen (G; G₁, ..., Gₘ; G'₁, ..., G'ₘ) die Häufigkeiten der einzelnen zugeordneten Alarmobjekte (AO; AO₁, ..., AOₙ) ermittelt werden und Alarmobjekte (AO; AO₁, ..., AOₙ), deren Ähnlichkeit einen vorgegebenen Alarmobjekt-Ähnlichkeitsschwellenwert übersteigt, als gleich angesehen und zu einem aggregierten Alarmobjekt zusammengefasst werden, dass die aggregierten Alarmobjekte der Alarmobjektgruppen (G; G₁, ..., Gₘ; G'₁, ..., G'ₘ) jeweils paarweise miteinander verglichen werden, und dass diejenigen Alarmobjektpaare ermittelt werden, deren Ähnlichkeit am größten ist, indem die Häufigkeiten der einzelnen zugeordneten Alarmobjekte (AO; AO₁, ..., AOₙ) verglichen werden,
c) dass zunächst innerhalb der einzelnen Alarmobjektgruppen (G; G₁, ..., Gₘ; G'₁, ..., G'ₘ) Alarmobjekte (AO; AO₁, ..., AOₙ), deren Ähnlichkeit einen vorgegebenen Alarmobjekt-Ähnlichkeitsschwellenwert übersteigt, als gleich angesehen und zu einem aggregierten Alarmobjekt zusammengefasst werden, dass die aggregierten Alarmobjekte der einzelnen Alarmobjektgruppen (G; G₁, ..., Gₘ; G'₁, ..., G'ₘ) Positionen innerhalb des jeweiligen Abschnitts der Alarmsequenz, den die jeweilige Alarmobjektgruppe (G; G₁, ..., Gₘ; G'₁, ..., G'ₘ) umfasst, zugeordnet werden und dass mittels Sequenzalignment die Ähnlichkeiten der aggregierten Alarmobjekte der als ähnlich erkannten Alarmobjektgruppen (G; G₁, ..., Gₘ; G'₁, ..., G'ₘ) ermittelt werden.

11. Verfahren nach einem der vorangehenden Ansprüche, **dadurch gekennzeichnet, dass** das Zusammenfassen der Alarmobjektgruppen (G; G₁, ..., Gₘ; G'₁, ..., G'ₘ) zu Alarmobjektmustern (P; P₁, ..., Pₖ) nach einer erstmaligen Erkennung neuerlich durchgeführt wird und die repräsentativen Alarmobjekte (RA; RA₁, ..., RAₗ) der einzelnen Alarmobjektmuster (P; P₁, ..., Pₖ) auf Grundlage der, in den neu hinzugekommenen, als ähnlich erkannten, Alarmobjektgruppen (G; G₁, ..., Gₘ; G'₁, ..., G'ₘ) enthaltenen, Alarmobjekte (AO; AO₁, ..., AOₙ) mit dem Verfahren eines der Ansprüche 8 bis 10 aktualisiert werden,
wobei vorgesehen ist, dass die bereits erstellten Alarmobjektmuster (P; P₁, ..., Pₖ) mit den neu erstellten Alarmobjektgruppen (G; G₁, ..., Gₘ; G'₁, ..., G'ₘ) mit dem Verfahren eines der Ansprüche 8 bis 10 zusammengefasst werden.

12. Verfahren nach einem der vorangehenden Ansprüche, **dadurch gekennzeichnet,**
- **dass** für neu erstellte Alarmobjektgruppen (G; G₁, ..., Gₘ; G'₁, ..., G'ₘ) die Ähnlichkeit mit den bereits erstellten Alarmobjektmustern (P; P₁, ..., Pₖ) berechnet wird, wobei eine neue erstellte Alarmobjektgruppe (G; G₁, ..., Gₘ; G'₁, ..., G'ₘ) als einem Alarmobjektmuster (P; P₁, ..., Pₖ) ähnlich erkannt wird, wenn die berechnete Ähnlichkeit zwischen der jeweiligen Alarmobjektgruppe (G; G₁, ..., Gₘ; G'₁, ..., G'ₘ) und dem jeweiligen Alarmobjektmuster (P; P₁, ..., Pₖ) einen vorgegebenen Ähnlichkeitsschwellenwert übersteigt, und
- **dass** diejenigen Alarmobjektmuster (P; P₁, ..., Pₖ), denen die neu erstellten Alarmobjektgruppen (G; G₁, ..., Gₘ; G'₁, ..., G'ₘ) als ähnlich erkannt wurden, auf Grundlage der, in den neu hinzugekommenen Alarmobjektgruppen (G; G₁, ..., Gₘ; G'₁, ..., G'ₘ) enthaltenen, Alarmobjekte (AO; AO₁, ..., AOₙ) aktualisiert, insbesondere die jeweiligen Alarmobjektmuster (P; P₁, ..., Pₖ) mit den neu erstellten Alarmobjektgruppen (G; G₁, ..., Gₘ; G'₁, ..., G'ₘ) mit dem Verfahren eines der Ansprüche 8 bis 11 zusammengefasst, werden,
wobei, im Fall, dass diejenige Alarmobjektgruppe, die als einem Alarmobjektmuster (P; P₁, ..., Pₖ) ähnlich erkannt wird, die gleichen Attribute aufweist, wie die Alarmobjektgruppen (G; G₁, ..., Gₘ; G'₁, ..., G'ₘ), auf denen das jeweilige Alarmobjektmuster (P; P₁, ..., Pₖ) basiert, die Attribute der repräsentativen Alarmobjekte (RA; RA₁, ..., RAₗ) des Alarmobjektmusters (P; P₁, ..., Pₖ) unverändert bleiben,
und/oder
- **dass** ein neues Alarmobjektmuster (P; P₁, ..., Pₖ) erstellt wird, wenn die Ähnlichkeit zwischen den neu erstellten Alarmobjektgruppen (G; G₁, ..., Gₘ; G'₁, ..., G'ₘ) und den bereits erstellten Alarmobjektmustern (P; P₁, ..., Pₖ) den vorgegebenen Ähnlichkeitsschwellenwert nicht übersteigt.

13. Datenträger, auf dem ein Programm zur Durchführung eines Verfahrens nach einem der vorangehenden Ansprüche abgespeichert ist.

## Claims

1. Method for classifying anomalous operating states of a computer network (1) that are due to variations of different attack types,
- wherein the computer network comprises a number of computers, wherein at least one attack detection system (S_{A}, S_{B}) for detecting anomalous operating states of the computer and/or of the computer network runs on the computers, wherein the at least one attack detection system (S_{A}, S_{B}) is designed to create alarm objects (AO; AO₁,..., AOₙ) when anomalous operating states occur which correspond to predefined detection cases in the form of an attack on the computer and/or the computer network, such that an alarm object sequence is thus generated in which the individual alarm objects (AO; AO₁,...,AOₙ) are contained in the temporal sequence in which they occur,
wherein the individual alarm objects (AO; AO₁, ..., AOₙ) are each assigned a number of attributes and values assigned to the attributes, in particular a number of numbers, character strings, lists of values, and/or objects, which characterise the respective anomalous operating state which has occurred and which has been detected as corresponding to a detection case,
**characterised in that**
- the individual alarm objects (AO; AO₁, ..., AOₙ) of the alarm object sequence are combined into alarm object groups (G; G₁, ..., Gₘ; G'₁, ..., G'ₘ) according to the temporal proximity of the time of their creation while specifying a temporal distance threshold value (δ), such that the alarm object groups each comprise subsequences of the alarm object sequence,
- the individual alarm object groups (G; G₁, ..., Gₘ; G'₁, ..., G'ₘ) are compared in terms of their similarity on the basis of the sequence, the frequency and/or the attributes of the alarm objects (AO; AO₁, ..., AOₙ) assigned to the respective alarm object groups (G; G₁, ..., Gₘ; G'₁, ..., G'ₘ) according to a predefined similarity metric and, based on their similarity, are combined into alarm object patterns (P; P₁, ..., Pₖ) in the form of data objects according to a predefined aggregation metric by specifying an alarm object group similarity threshold value (t),
wherein the alarm object patterns (P; P₁,..., Pₖ) are respectively allocated representative alarm objects (RA; RA₁, ..., Pₗ) which represent those alarm objects (AO; AO₁, ..., AOₙ), in particular their attributes and values, which are assigned to the alarm object groups (G; G₁,..., Gₘ; G'₁,..., G'ₘ) detected as similar, and wherein each alarm object pattern (P; P₁,..., Pₖ) is assigned an attack type, and
- those anomalous operating states underlying those alarm objects (AO; AO₁, ..., AOₙ) which are assigned to the alarm object groups (G; G₁,..., Gₘ; G'₁, ..., G'ₘ) combined into a respective alarm object pattern (P; P₁, ..., Pₖ) are detected as anomalous operating states which are attributable to that attack type which is assigned to the respective alarm object pattern (P; P₁,..., Pₖ).

2. Method according to claim 1, **characterised in that**
- a number of different temporal distance threshold values (δₛₘₐₗₗ, δ_{large}, δ₃) are used simultaneously for combining into alarm object groups (G; G₁, ..., Gₘ; G'₁, ..., G'ₘ),
and/or
- the individual alarm objects (AO; AO₁,...,AOₙ) of the alarm sequence are combined into alarm object groups (G; G₁,..., Gₘ; G'₁,..., G'ₘ) according to the similarity of the attributes assigned to the alarm objects (AO; AO₁, ..., AOₙ).

3. Method according to any of the preceding claims, **characterised in that** a database (D) is created, wherein the created alarm object groups (G; G₁,..., Gₘ; G'₁,..., G'ₘ) and alarm object patterns (P; P₁,..., Pₖ), as well as the affiliation of the individual alarm object groups (G; G₁, ..., Gₘ; G'₁, ..., G'ₘ) to the individual alarm object patterns (P; P₁,..., Pₖ) are stored in the database (D).

4. Method according to claim 3, **characterised in that**
- the individual alarm object groups (G; G₁,..., Gₘ; G'₁,..., G'ₘ) are stored in the database (D) after they have been created, and
- the alarm object patterns (P; P₁, ..., Pₖ) are created on the basis of the alarm object groups (G; G₁,..., Gₘ; G'₁,..., G'ₘ) stored in the database (D), wherein it is provided that, in the event that the database (D) contains only a single alarm object group (G; G₁,..., Gₘ; G'₁, ..., G'ₘ), an alarm object pattern (P; P₁, ..., Pₖ) is created whose representative alarm objects (RA; RA₁, ..., RAₗ) are identical to the alarm objects (AO; AO₁, ..., AOₙ) of the single alarm object group (G; G₁,..., Gₘ; G'₁,..., G'ₘ).

5. Method according to claim 3 or 4, **characterised in that** the affiliation of the individual alarm object groups (G; G₁, ..., Gₘ; G'₁, ..., G'ₘ) to the individual alarm object patterns is stored in the database in the form of lists comprising the alarm object groups (G; G₁,..., Gₘ; G'₁,..., G'ₘ) assigned to a respective alarm object pattern, wherein lists of at least one of the following types are created:
- unrestricted lists,
- linearly fillable lists,
- logarithmically fillable lists, and
wherein it is provided that the probability of an element of a logarithmically fillable list being substituted decreases as the position of the element in the logarithmically fillable list descends.

6. Method according to any of the preceding claims, **characterised in that** the similarity of the alarm objects (AO; AO₁,...,AOₙ) of the individual alarm object groups (G; G₁,..., Gₘ; G'₁,..., G'ₘ) is calculated and/or for newly created alarm object groups (G; G₁,..., Gₘ; G'₁,..., G'ₘ) the similarity with the already created alarm object patterns (P; P₁,..., Pₖ) is calculated by searching for matching attributes and/or matching values assigned to the attributes.

7. Method according to claim 6, **characterised in that**
- all attributes of the alarm objects (AO; AO₁, ..., AOₙ) to be analysed in terms of their similarity are compared with one another and the number of matches and differences between the values assigned to the respective attributes are determined in each case, and
- an overall similarity of the alarm objects (AO; AO₁, ..., AOₙ) within an alarm object group (AO; AO₁,...,AOₙ) is determined as a ratio of the determined matches to the sum of the matches and differences.

8. Method according to any of the preceding claims, **characterised in that** the alarm object groups (G; G₁,..., Gₘ; G'₁,..., G'ₘ) detected as similar are combined into alarm object patterns (P; P₁,..., Pₖ) by
- searching according to a predefined similarity metric for matching alarm objects (AO; AO₁, ..., AOₙ) in the individual alarm object groups (G; G₁,..., Gₘ; G'₁, ..., G'ₘ) detected as similar, and
- the individual matching alarm objects (AO; AO₁, ..., AOₙ) are combined by using the attributes of the matching alarm objects (AO; AO₁, ..., AOₙ) detected as matching and selected values which are assigned to the attributes detected as matching in the respective alarm objects (AO; AO₁, ..., AOₙ), are stored together with the respective attribute in the corresponding representative alarm object (RA; RA₁,..., RAₗ) of the alarm object pattern (P; P₁,..., Pₖ).

9. Method according to claim 8, **characterised in that**, when the individual matching alarm objects (AO; AO₁, ..., AOₙ) of the alarm object groups (G; G₁,..., Gₘ; G'₁,..., G'ₘ) are combined into alarm object patterns (P; P₁,..., Pₖ)
- lists comprising selected values which are assigned to an attribute detected as matching in the respective matching alarm objects (AO; AO₁, ..., AOₙ) are stored together with the respective attribute in the respective corresponding representative alarm object (RA; RA₁, ..., RAₗ) of the alarm object pattern (P; P₁, ..., Pₖ) and/or
- placeholders for the values assigned to an attribute detected as matching in the respective matching alarm objects (AO; AO₁, ..., AOₙ) are stored in the respective corresponding representative alarm object (RA; RA₁, ..., RAₗ) of the alarm object pattern (P; P₁, ..., Pₖ) if the number of different values assumed by the respective attribute in the respective alarm objects exceeds a predefined maximum value.

10. Method according to any of the preceding claims, **characterised in that** the similarity metric for the search for matching alarm objects (AO; AO₁, ..., AOₙ) in the alarm object groups (G; G₁, ..., Gₘ; G'₁, ..., G'ₘ) is based on at least one of the following approaches:
a) the alarm objects (AO; AO₁, ..., AOₙ) assigned to the alarm object groups (G; G₁, ..., Gₘ; G'₁, ..., G'ₘ) are in each case compared with one another in pairs in terms of their similarity, and those alarm object pairs are determined whose similarity is greatest, wherein it is provided that each alarm object (AO; AO₁, ..., AOₙ) is contained in only one alarm object pair,
b) firstly within the individual alarm object groups (G; G₁,..., Gₘ; G'₁,..., G'ₘ) the frequencies of the individual assigned alarm objects (AO; AO₁, ..., AOₙ) are determined and alarm objects (AO; AO₁, ..., AOₙ) whose similarity exceeds a predefined alarm object similarity threshold value are regarded as identical and are combined into an aggregated alarm object, the aggregated alarm objects of the alarm object groups (G; G₁, ..., Gₘ; G'₁, ..., G'ₘ) are in each case compared with one another in pairs, and those alarm object pairs whose similarity is greatest are determined by comparing the frequencies of the individual assigned alarm objects AO; AO₁, ..., AOₙ) with one another,
c) firstly within the individual alarm object groups (G; G₁, ..., Gₘ; G'₁, ..., G'ₘ) alarm objects (AO; AO₁, ..., AOₙ) whose similarity exceeds a predefined alarm object similarity threshold value are regarded as identical and are combined into an aggregated alarm object, the aggregated alarm objects of the individual alarm object groups (G; G₁,..., Gₘ; G'₁,..., G'ₘ) are assigned to positions within the respective section of the alarm sequence, which section comprises the respective alarm object group (G; G₁, ..., Gₘ; G'₁, ..., G'ₘ), and the similarities between the aggregated alarm objects of the alarm object groups (G; G₁, Gₘ; G'₁, G'ₘ) detected as similar are determined by means of sequence alignment.

11. Method according to any of the preceding claims, **characterised in that** the combining of the alarm object groups (G; G₁,..., Gₘ; G'₁,..., G'ₘ) into alarm object patterns (P; P₁, ..., Pₖ) is carried out again after a first detection and the representative alarm objects (RA; RA₁, ..., RAₗ) of the individual alarm object patterns (P; P₁, ..., Pₖ) are updated on the basis of the alarm objects (AO; AO₁,...,AOₙ) contained in the newly added alarm object groups (G; G₁,..., Gₘ; G'₁,..., G'ₘ) detected as similar, using the method of one of claims 8 to 10,
wherein it is provided that the already created alarm object patterns (P; P₁,..., Pₖ) are combined with the newly created alarm object groups (G; G₁, ..., Gₘ; G'₁, ..., G'ₘ) using the method of one of claims 8 to 10.

12. Method according to any of the preceding claims, **characterised in that**
- for newly created alarm object groups (G; G₁,..., Gₘ; G'₁,..., G'ₘ) the similarity with the already created alarm object patterns (P; P₁,..., Pₖ) is calculated, wherein a newly created alarm object group (G; G₁, ..., Gₘ; G'₁, ..., G'ₘ) is detected as similar to an alarm object pattern (P; P₁, ..., Pₖ) if the calculated similarity between the respective alarm object group (G; G₁,..., Gₘ; G'₁,..., G'ₘ) and the respective alarm object pattern (P; P₁, ..., Pₖ) exceeds a predefined similarity threshold value, and
- **in that** those alarm object patterns (P; P₁, ..., Pₖ) to which the newly created alarm object groups (G; G₁,..., Gₘ; G'₁, ..., G'ₘ) have been detected as similar are updated on the basis of the alarm objects (AO; AO₁, ..., AOₙ) contained in the newly added alarm object groups (G; G₁, ..., Gₘ; G'₁, ..., G'ₘ), in particular the respective alarm object patterns (P; P₁, ..., Pₖ) are combined with the newly created alarm object groups (G; G₁, ..., Gₘ; G'₁,..., G'ₘ) using the method of one of claims 8 to 11,
wherein, in the case that the alarm object group detected as similar to an alarm object pattern (P; P₁, ..., Pₖ) has the same attributes as the alarm object groups (G; G₁, ..., Gₘ; G'₁, ..., G'ₘ) on which the respective alarm object pattern (P; P₁,..., Pₖ) is based, the attributes of the representative alarm objects (RA; RA₁,..., RAₗ) of the alarm object pattern (P; P₁,..., Pₖ) remain unchanged,
and/or
- **in that** a new alarm object pattern (P; P₁,..., Pₖ) is created if the similarity between the newly created alarm object groups (G; G₁,..., Gₘ; G'₁,..., G'ₘ) and the already created alarm object patterns (P; P₁, ..., Pₖ) does not exceed the predefined similarity threshold value.

13. Data carrier on which a program for carrying out a method according to any of the preceding claims is stored.

## Revendications

1. Procédé de classification d'états de fonctionnement anormaux d'un réseau informatique (1), qui sont dus à des variations de différents types d'attaques,
- dans lequel le réseau informatique comprend un certain nombre d'ordinateurs, dans lequel au moins un système de détection d'attaque (S_{A}, S_{B}) est exécuté sur les ordinateurs pour détecter des états de fonctionnement anormaux de l'ordinateur et/ou du réseau informatique, dans lequel l'au moins un système de détection d'attaque (S_{A}, S_{B}) est conçu pour, lors de l'apparition d'états de fonctionnement anormaux qui correspondent à des cas de détection prédéfinis au préalable sous la forme d'une attaque sur l'ordinateur et/ou le réseau informatique, créer des objets d'alarme (AO ; AO₁,..., AOₙ), de sorte qu'une séquence d'objets d'alarme est ainsi générée, dans laquelle les différents objets d'alarme (AO ; AO₁,..., AOₙ) sont contenus dans l'ordre chronologique de leur survenue,
dans lequel un certain nombre d'attributs et de valeurs associées aux attributs, notamment un certain nombre de chiffres, de chaînes de caractères, de listes de valeurs et/ou d'objets, sont associés aux différents objets d'alarme (AO ; AO₁, ..., AOₙ), lesquels caractérisent l'état de fonctionnement anormal qui est apparu respectivement et qui a été détecté comme correspondant à un cas de détection,
**caractérisé en ce que**
- les différents objets d'alarme (AO ; AO₁, ..., AOₙ) de la séquence d'objets d'alarme sont regroupés en groupes d'objets d'alarme (G ; G₁, ..., Gₘ ; G'₁, ..., G'ₘ) selon la proximité temporelle de l'instant de leur création en prédéfinissant une valeur seuil d'écart temporel (δ), de sorte que les groupes d'objets d'alarme comprennent respectivement des séquences partielles de la séquence d'objets d'alarme,
- les différents groupes d'objets d'alarme (G ; G₁, ..., Gₘ ; G'₁, ..., G'ₘ) sont comparés en ce qui concerne leur similitude sur la base de l'ordre, de la fréquence et/ou des attributs des objets d'alarme (AO ; AO₁, ..., AOₙ) associés aux groupes d'objets d'alarme (G ; G₁, ..., Gₘ ; G'₁, ..., G'ₘ) respectifs selon une métrique de similitude prédéfinie et sont regroupés en modèles d'objets d'alarme (P ; P₁, ..., Pₖ) sous forme d'objets de données en raison de leur similitude selon une métrique d'agrégation prédéfinie, en prédéfinissant une valeur seuil de similitude de groupes d'objets d'alarme (t),
dans lequel aux modèles d'objets d'alarme (P ; P₁,..., Pₖ) sont respectivement attribués des objets d'alarme représentatifs (RA ; RA₁, ..., Pₗ), qui représentent les objets d'alarme (AO ; AO₁, ..., AOₙ), en particulier leurs attributs et valeurs, qui sont associés aux groupes d'objets d'alarme (G ; G₁,..., Gₘ ; G'₁,..., G'ₘ) détectés comme similaires, et dans lequel un type d'attaque est associé à chaque modèle d'objets d'alarme (P ; P₁,..., Pₖ), et
- les états de fonctionnement anormaux qui sont à la base des objets d'alarme (AO ; AO₁, ..., AOₙ) qui sont associés aux groupes d'objets d'alarme (G ; G₁, ..., Gₘ ; G'₁, ..., G'ₘ) regroupés en un modèle d'objets d'alarme (P ; P₁, ..., Pₖ) respectif sont détectés comme des états de fonctionnement anormaux qui sont dus au type d'attaque associé au modèle d'objets d'alarme (P ; P₁,..., Pₖ) respectif.

2. Procédé selon la revendication 1, **caractérisé en ce que**
- un certain nombre de valeurs seuils d'écart temporel différentes (δₛₘₐₗₗ, δ_{large}, 6₃) sont utilisées simultanément pour le regroupement en groupes d'objets d'alarme (G ; G₁, ..., Gₘ ; G'₁, ..., G'ₘ),
et/ou
- les différents objets d'alarme (AO ; AO₁,..., AOₙ) de la séquence d'alarme sont regroupés en groupes d'objets d'alarme (G ; G₁,..., Gₘ ; G'₁,..., G'ₘ) selon la similitude des attributs associés aux objets d'alarme (AO ; AO₁, ..., AOₙ).

3. Procédé selon l'une quelconque des revendications précédentes, **caractérisé en ce qu'**une base de données (D) est créée, dans lequel les groupes d'objets d'alarme (G ; G₁,..., Gₘ ; G'₁,..., G'ₘ) et les modèles d'objets d'alarme (P; P₁,..., Pₖ) créés, ainsi que l'appartenance des différents groupes d'objets d'alarme (G ; G₁, ..., Gₘ ; G'₁, ..., G'ₘ) aux différents modèles d'objets d'alarme (P ; P₁,..., Pₖ) sont consignés dans la base de données (D).

4. Procédé selon la revendication 3, **caractérisé en ce que**
- les différents groupes d'objets d'alarme (G ; G₁,..., Gₘ ; G'₁,..., G'ₘ) sont consignés dans la base de données (D) après leur création, et
- les modèles d'objets d'alarme (P ; P₁, ..., Pₖ) sont créés sur la base des groupes d'objets d'alarme (G ; G₁,..., Gₘ ; G'₁,..., G'ₘ) consignés dans la base de données (D), dans lequel il est prévu que, dans le cas où la base de données (D) ne contient qu'un unique groupe d'objets d'alarme (G ; G₁,..., Gₘ ; G'₁, ..., G'ₘ), un modèle d'objets d'alarme (P ; P₁, ..., Pₖ) soit créé, dont les objets d'alarme représentatifs (RA; RA₁, ..., RAₗ) sont identiques aux objets d'alarme (AO ; AO₁, ..., AOₙ) de l'unique groupe d'objets d'alarme (G ; G₁,..., Gₘ ; G'₁,..., G'ₘ).

5. Procédé selon la revendication 3 ou 4, **caractérisé en ce que** l'appartenance des différents groupes d'objets d'alarme (G ; G₁, ..., Gₘ ; G'₁, ..., G'ₘ) aux différents modèles d'objets d'alarme est consignée dans la base de données sous forme de listes comprenant les groupes d'objets d'alarme (G ; G₁,..., Gₘ ; G'₁,..., G'ₘ) associés à un modèle d'objets d'alarme respectif, dans lequel des listes d'au moins l'un des types suivants sont créées :
- listes illimitées,
- listes pouvant être remplies de manière linéaire,
- listes pouvant être remplies de manière logarithmique, et
dans lequel il est prévu que la probabilité d'un remplacement d'un élément d'une liste pouvant être remplie de manière logarithmique diminue avec la position décroissante de l'élément dans la liste pouvant être remplie de manière logarithmique.

6. Procédé selon l'une quelconque des revendications précédentes, **caractérisé en ce que** la similitude des objets d'alarme (AO ; AO₁,..., AOₙ) des différents groupes d'objets d'alarme (G ; G₁,..., Gₘ ; G'₁,..., G'ₘ) et/ou pour les groupes d'objets d'alarme (G ; G₁,..., Gₘ ; G'₁,..., G'ₘ) nouvellement créés la similitude avec les modèles d'objets d'alarme (P ; P₁,..., Pₖ) déjà créés est calculée en recherchant des attributs concordants et/ou des valeurs concordantes associées aux attributs.

7. Procédé selon la revendication 6, **caractérisé en ce que**
- tous les attributs des objets d'alarme (AO ; AO₁, ..., AOₙ) à analyser en ce qui concerne leur similitude sont comparés les uns aux autres et le nombre de concordances et de différences des valeurs associées aux attributs respectifs est respectivement déterminé et
- une similitude globale des objets d'alarme (AO; AO₁, ..., AOₙ) à l'intérieur d'un groupe d'objets d'alarme (AO ; AO₁, ..., AOₙ) est déterminée en tant que rapport entre les concordances déterminées et la somme des concordances et des différences.

8. Procédé selon l'une quelconque des revendications précédentes, **caractérisé en ce que** les groupes d'objets d'alarme (G ; G₁,..., Gₘ ; G'₁,..., G'ₘ) détectés comme similaires sont regroupés en modèles d'objets d'alarme (P ; P₁,..., Pₖ), en
- recherchant, selon une métrique de similitude prédéfinie, des objets d'alarme (AO ; AO₁, ..., AOₙ) concordants dans les différents groupes d'objets d'alarme (G ; G₁,..., Gₘ ; G'₁, ..., G'ₘ) détectés comme similaires, et
- regroupant les différents objets d'alarme (AO ; AO₁, ..., AOₙ) concordants en utilisant respectivement les attributs détectés comme concordants des objets d'alarme (AO ; AO₁, ..., AOₙ) concordants et en consignant des valeurs sélectionnées, qui sont associées aux attributs détectés comme concordants dans les objets d'alarme (AO ; AO₁, ..., AOₙ) respectifs, conjointement avec l'attribut respectif dans l'objet d'alarme représentatif (RA ; RA₁,..., RAₗ) correspondant du modèle d'objets d'alarme (P ; P₁,..., Pₖ).

9. Procédé selon la revendication 8, **caractérisé en ce que**, lors du regroupement des différents objets d'alarme (AO ; AO₁, ..., AOₙ) concordants des groupes d'objets d'alarme (G ; G₁,..., Gₘ ; G'₁,..., G'ₘ) en modèles d'objets d'alarme (P ; P₁,..., Pₖ)
- des listes comprenant des valeurs sélectionnées, qui sont associées à un attribut détecté comme concordant dans les objets d'alarme (AO ; AO₁, ..., AOₙ) concordants respectifs, sont consignées conjointement avec l'attribut respectif dans respectivement l'objet d'alarme représentatif (RA ; RA₁, ..., RAₗ) correspondant du modèle d'objets d'alarme (P ; P₁, ..., Pₖ) et/ou
- des caractères de remplacement pour les valeurs qui sont associées à un attribut détecté comme concordant dans les objets d'alarme (AO ; AO₁, ..., AOₙ) concordants respectifs sont consignés dans respectivement l'objet d'alarme représentatif (RA ; RA₁, ..., RAₗ) correspondant du modèle d'objets d'alarme (P ; P₁, ..., Pₖ), lorsque le nombre de valeurs différentes que l'attribut respectif prend dans les objets d'alarme respectifs dépasse une valeur maximale prédéfinie.

10. Procédé selon l'une quelconque des revendications précédentes, **caractérisé en ce que** la métrique de similitude pour la recherche d'objets d'alarme (AO; AO₁, ..., AOₙ) concordants dans les groupes d'objets d'alarme (G ; G₁, ..., Gₘ ; G'₁, ..., G'ₘ) repose sur au moins l'une des procédures suivantes :
a) le fait que les objets d'alarme (AO ; AO₁, ..., AOₙ) associés aux groupes d'objets d'alarme (G ; G₁, ..., Gₘ ; G'₁, ..., G'ₘ) sont comparés les uns aux autres respectivement par paires en ce qui concerne leur similitude, et le fait que les paires d'objets d'alarme dont la similitude est la plus grande sont déterminées, dans lequel il est prévu que chaque objet d'alarme (AO ; AO₁, ..., AOₙ) ne soit contenu que dans une paire d'objets d'alarme,
b) le fait que, d'abord à l'intérieur des différents groupes d'objets d'alarme (G ; G₁,..., Gₘ ; G'₁,..., G'ₘ), les fréquences des différents objets d'alarme (AO ; AO₁, ..., AOₙ) associés sont déterminées et les objets d'alarme (AO ; AO₁, ..., AOₙ) dont la similitude dépasse une valeur seuil de similitude d'objet d'alarme prédéfinie sont considérés comme identiques et regroupés en un objet d'alarme agrégé, le fait que les objets d'alarme agrégés des groupes d'objets d'alarme (G ; G₁, ..., Gₘ ; G'₁, ..., G'ₘ) sont comparés les uns aux autres respectivement par paires, et le fait que les paires d'objets d'alarme dont la similitude est la plus grande sont déterminées en comparant les fréquences des différents objets d'alarme (AO ; AO₁, ..., AOₙ) associés,
c) le fait que, d'abord à l'intérieur des différents groupes d'objets d'alarme (G ; G₁, ..., Gₘ ; G'₁, ..., G'ₘ), les objets d'alarme (AO ; AO₁, ..., AOₙ) dont la similitude dépasse une valeur seuil de similitude d'objet d'alarme prédéfinie sont considérés comme identiques et regroupés en un objet d'alarme agrégé, le fait que les objets d'alarme agrégés des différents groupes d'objets d'alarme (G ; G₁,..., Gₘ ; G'₁,..., G'ₘ) sont associés à des positions à l'intérieur de la section respective de la séquence d'alarme que comprend le groupe d'objets d'alarme (G ; G₁, ..., Gₘ ; G'₁, ..., G'ₘ) respectif, et le fait que les similitudes des objets d'alarme agrégés des groupes d'objets d'alarme (G ; G₁, Gₘ ; G'₁, G'ₘ) détectés comme similaires sont déterminées au moyen d'un alignement de séquence.

11. Procédé selon l'une quelconque des revendications précédentes, **caractérisé en ce que** le regroupement des groupes d'objets d'alarme (G ; G₁,..., Gₘ ; G'₁,..., G'ₘ) en modèles d'objets d'alarme (P ; P₁, ..., Pₖ) est à nouveau effectué après une première détection et les objets d'alarme représentatifs (RA; RA₁, ..., RAₗ) des différents modèles d'objets d'alarme (P ; P₁, ..., Pₖ) sont mis à jour sur la base des objets d'alarme (AO ; AO₁,..., AOₙ) contenus dans les groupes d'objets d'alarme (G ; G₁,..., Gₘ ; G'₁,..., G'ₘ) détectés comme similaires nouvellement ajoutés avec le procédé selon l'une quelconque des revendications 8 à 10,
dans lequel il est prévu que les modèles d'objets d'alarme (P ; P₁,..., Pₖ) déjà créés soient regroupés avec les groupes d'objets d'alarme (G ; G₁, ..., Gₘ ; G'₁, ..., G'ₘ) nouvellement créés avec le procédé selon l'une quelconque des revendications 8 à 10.

12. Procédé selon l'une quelconque des revendications précédentes, **caractérisé en ce que**
- pour des groupes d'objets d'alarme nouvellement créés (G ; G₁,..., Gₘ ; G'₁,..., G'ₘ), la similitude avec les modèles d'objets d'alarme (P ; P₁,..., Pₖ) déjà créés est calculée, dans lequel un nouveau groupe d'objets d'alarme (G ; G₁, ..., Gₘ ; G'₁, ..., G'ₘ) créé est détecté comme similaire à un modèle d'objets d'alarme (P; P₁, ..., Pₖ) si la similitude calculée entre le groupe d'objets d'alarme (G ; G₁,..., Gₘ ; G'₁,..., G'ₘ) respectif et le modèle d'objets d'alarme (P ; P₁, ..., Pₖ) respectif dépasse une valeur seuil de similitude prédéfinie, et
- les modèles d'objets d'alarme (P ; P₁, ..., Pₖ), auxquels ont été détectés comme similaires les groupes d'objets d'alarme (G ; G₁, ..., Gₘ ; G'₁, ..., G'ₘ) nouvellement créés, sont mis à jour sur la base des objets d'alarme (AO ; AO₁, ..., AOₙ) contenus dans les groupes d'objets d'alarme (G ; G₁, ..., Gₘ ; G'₁, ..., G'ₘ) nouvellement ajoutés, en particulier les modèles d'objets d'alarme (P ; P₁, ..., Pₖ) respectifs sont regroupés avec les groupes d'objets d'alarme (G ; G₁, ..., Gₘ ; G'₁,..., G'ₘ) nouvellement créés avec le procédé selon l'une quelconque des revendications 8 à 11,
dans lequel, dans le cas où le groupe d'objets d'alarme qui est détecté comme similaire à un modèle d'objets d'alarme (P; P₁, ..., Pₖ) présente les mêmes attributs que les groupes d'objets d'alarme (G ; G₁, ..., Gₘ ; G'₁, ..., G'ₘ) sur lesquels le modèle d'objets d'alarme (P ; P₁,..., Pₖ) respectif est basé, les attributs des objets d'alarme représentatifs (RA ; RA₁,..., RAₗ) du modèle d'objets d'alarme (P; P₁,..., Pₖ) restent inchangés,
et/ou
- un nouveau modèle d'objets d'alarme (P ; P₁,..., Pₖ) est créé lorsque la similitude entre les groupes d'objets d'alarme (G ; G₁, ..., Gₘ ; G'₁,..., G'ₘ) nouvellement créés et les modèles d'objets d'alarme (P ; P₁, ..., Pₖ) déjà créés ne dépasse pas la valeur seuil de similitude prédéfinie.

13. Support de données sur lequel un programme est enregistré pour la mise en œuvre d'un procédé selon l'une quelconque des revendications précédentes.
